# EUROPEAN PATENT SPECIFICATION

(11) **EP 1 642 443 B1**
(45) Date of publication and mention of the grant of the patent: **20.05.2015**
(21) Application number: 04777569.7
(22) Date of filing: 01.07.2004
(51) Int. Cl.: H04L 29/06

(54) **METHOD FOR MANAGING A STREAMING MEDIA SERVICE**
VERFAHREN ZUR VERWALTUNG EINES STREAMING-MEDIA-DIENSTES
PROCEDE DE GESTION D'UN SERVICE MEDIA EN CONTINU

(30) Priority: 04.07.2003 US 613905
(43) Date of publication of application: 05.04.2006
(73) Proprietor: HEWLETT-PACKARD DEVELOPMENT COMPANY, L.P., Houston, TX 77070 (US)
(72) Inventor: HARVILLE, Michael, Palo Alto, California 94306 (US); COVELL, Michele, Palo Alto, California 94306 (US); WEE, Susie, J., Palo Alto, California 94304 (US); SUMIT, Roy, Menlo Park, California 94026 (US); ANKCORN, John, Palo Alto, California 94306 (US); SHEN, Bo, Fremont, California 94539 (US)
(74) Representative: Zimmermann, Tankred Klaus
(86) International application number: PCT/US2004/021526
(87) International publication number: WO 2005/006709

(56) References cited:
- OOI, WEI TSANG AND VAN RENESSE, ROBBERT: "Distributing Media Transformation Over Multiple Media Gateways" PROCEEDINGS 9TH ACM INTERNATIONAL MULTIMEDIA CONFERENCE, OTTAWA, CANADA, October 2001 (2001-10), pages 159-168, XP002299886
- ROY S ET AL: "A system architecture for managing mobile streaming media services" PROCEEDINGS OF THE 23RD INTERNATIONAL CONFERENCE ON DISTRIBUTED COMPUTING SYSTEMS WORKSHOPS ICDCSW'03, 19 May 2003 (2003-05-19), pages 408-413, XP010642405

## Description

### BACKGROUND

There are systems wherein a client device can request a delivery of a media file along with some processing done to that requested media file such as noise reduction. Once the media delivery requested is received by a server, the media file is retrieved and then the requested processing is performed on that media file by the server. Once the processing is completely done, the server sends the processed media file to the client device. There are problems with this type of system. For example, the user of the client device may have to wait quite a while if the server is trying to handle many separate requests of processing and transmitting media files to different requesting client devices. Also, the streaming media file can be very large, and it can take a long time to complete the requested processing on the content prior to initiation of streaming delivery. This can be frustrating to the client device user especially if he or she is trying to complete something before a deadline.

Ooi, Wei Tsang and Van Renesse, Robbert describe in "Distributing Media Transformation Over Multiple Media Gateways" Proceedings 9th ACM International Multimedia Conference, Ottawa, Canada, October 2001 (2001-10), pages 159-168, composable services in media gateways. A user can request a computation to be performed on a set of media streams. The system then distributes the computation over multiple gateways for execution. A algorithm for decomposing the computation into sub-computations is described as well as an application-level protocol that locates appropriate media gateways to run these sub-computations.

Roy S et al describe in "A system architecture for managing mobile streaming media services" Proceedings of the 23rd International Conference on Distributed Computing Systems Workshops ICDCSW'03, 19 May 2003 (2003-05-19), pages 408-413 a mobile streaming media content delivery network (MSM-CDN) overlay system that provides a scalable method for delivering media streams to a large number of clients. With the availability of such a streaming infrastructure, it becomes possible to implement enhanced media services. The wide range and variability of network conditions, as well as processing and display capabilities of these devices will effectively require media streams to be adapted in the network. Each streaming session needs to be tailored to these changing environments in a practical and scalable manner. Media transcoding services can be performed by the servers of the MSM-CDN overlay, providing this flexibility. Due to the computational and bandwidth requirements of real-time video transcoding, these services require management of the placement of these tasks on the most appropriate servers, to make best use of the distributed resources available within the network. An effective load balancing system requires appropriate resource monitoring.

It is the object of the invention to provide an improved method for managing a streaming media service avoiding expensive processes and complex data paths.

This object is achieved by a method according to claim 1.

### SUMMARY OF THE INVENTION

One embodiment of the invention includes a method for managing a streaming media service. The method includes receiving a request for a streaming media service from a client. The streaming media service includes a plurality of media services components. Additionally, the method includes determining which media service component of the plurality of media services components to assign to a service node of a plurality of service nodes of a network. The method also includes informing each service node assigned to perform a media service component of the plurality of media services components enabling the streaming media service to be performed on a streaming media.

### BRIEF DESCRIPTION OF THE DRAWINGS

Figure 1 is a diagram illustrating a conventional way of delivering media to multiple mobile client devices.
Figure 2 is a diagram illustrating a conventional way of processing and delivering media to a mobile client device.
Figure 3 is a diagram of an embodiment in accordance with the present invention.
Figure 4 is a diagram of an embodiment in accordance with the present invention.
Figure 5A is a diagram of an embodiment in accordance with the present invention.
Figure 5B is a diagram of an embodiment in accordance with the present invention.
Figure 6 is a block diagram of an exemplary system for data session handoff having a single content server upon which embodiments of the present invention may be practiced.
Figure 7 is a block diagram of another exemplary system for data session handoff having a content distribution network upon which embodiments of the present invention may be practiced.
Figure 8A and 8B is a flowchart illustrating a process of data session handoff in accordance with one embodiment of the present invention.
Figure 9 is a diagram of an embodiment in accordance with the present invention.
Figure 10 is block diagram illustrating exemplary operations by which a Media Service Architecture (MSA) decomposes and distributes services in accordance with an embodiment of the present invention.
Figure 11 is a block diagram of a service location management methodology in accordance with an embodiment of the present embodiment.
Figure 12a is an exemplary abstract graph of Components of a service in accordance with embodiments of the present invention.
Figures 12b-d illustrate three exemplary distributions of Components on a network in accordance with embodiments of the present invention.
Figure 13 is a flowchart of operations performed in accordance with an embodiment of the present invention for managing a streaming media service.
Figure 14 is a block diagram of multiple media streams being handled within the MSA in accordance with an embodiment of the present invention.
Figure 15 is a block diagram of multiple media streams being handled within the MSA in accordance with another embodiment of the present invention.
Figure 16 is a flowchart of operations performed in accordance with an embodiment of the present invention.
Figure 17 is a flowchart of operations performed in accordance with another embodiment of the present invention.

### DESCRIPTION OF THE PREFERRED EMBODIMENTS

Reference will now be made in detail to embodiments of the invention, examples of which are illustrated in the accompanying drawings. While the invention will be described in conjunction with embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, it will be evident to one of ordinary skill in the art that the present invention may be practiced without these specific details. In other instances, well known methods, procedures, components, and circuits have not been described in detail as not to unnecessarily obscure aspects of the present invention.

### NOTATION AND NOMENCLATURE

Some portions of the detailed descriptions which follow are presented in terms of procedures, logic blocks, processing, and other symbolic representations of operations on data bits within a computing system or digital system memory. These descriptions and representations are the means used by those skilled in the data processing arts to most effectively convey the substance of their work to others skilled in the art. A procedure, logic block, process, etc., is herein, and generally, conceived to be a self-consistent sequence of operations or instructions leading to a desired result. The operations may involve physical manipulations of physical quantities. Usually, though not necessarily, these physical manipulations take the form of electrical or magnetic signals capable of being stored, transferred, combined, compared, and otherwise manipulated in a computing system or similar electronic computing device. For reasons of convenience, and with reference to common usage, these signals are referred to as bits, values, elements, symbols, characters, terms, numbers, or the like with reference to the present invention.

It should be borne in mind, however, that all of these terms are to be interpreted as referencing physical manipulations and quantities and are merely convenient labels and are to be interpreted further in view of terms commonly used in the art. Unless specifically stated otherwise as apparent from the following discussions, it is understood that throughout discussions of the present invention, discussions utilizing terms such as "determining", "applying", "processing", "performing", "deciding", "ascertaining", "transmitting", "receiving", "retrieving", "providing", "recognizing", "generating", "utilizing", "removing", "informing", "excluding", "discarding", "implementing", "employing", "storing" or the like, refer to the action and processes of a computing system, or similar electronic computing device, that manipulates and transforms data. The data is represented as physical (electronic) quantities within the computing system's registers and memories and is transformed into other data similarly represented as physical quantities within the computing system's memories or registers or other such information storage, transmission, or display devices.

### INTRODUCTION

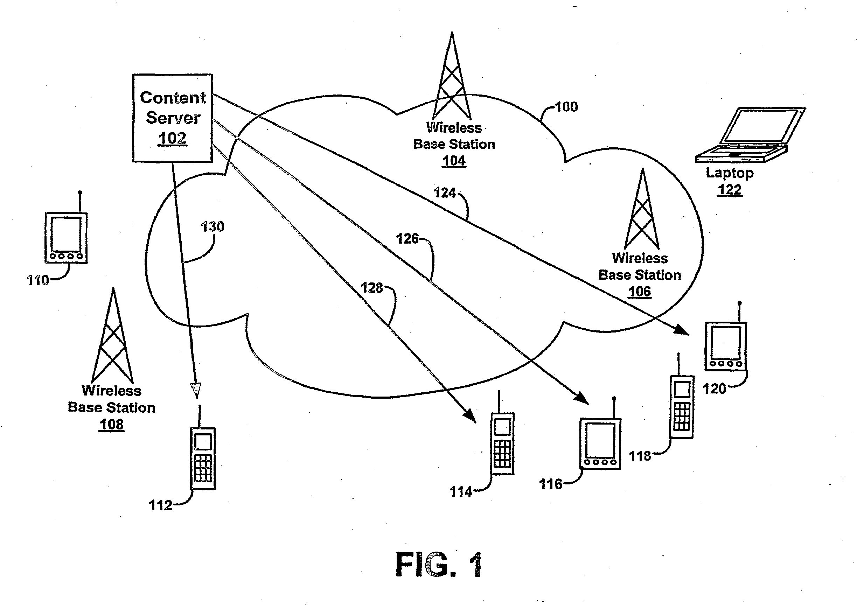

Typically, people learn of various content sites (e.g., a video-based movie page) based on their web-browsing experiences from their desktop or laptop (e.g., 122 of Figure 1) machines, since these devices are better able to support the input (typing various URLs or search queries) and output (reliable, high-bandwidth connections) requirements of random browsing on the net. Believing in the promise of high-bandwidth wireless access, these web users may try to connect to the same sites using their personal digital assistants (PDAs), e.g., 110, 116 and 120, or video-enabled cell phones, e.g., 112, 114 and 118. This wider access results in the need for the content provider to support a wide range of different bit-rates (according to the bandwidth of the connection), video-frame rates (according to the CPU power available at the client, which itself varies dynamically according to power-management strategies), and video-frame sizes (according to the display size available at the client). Also, as seen by 3GPP [1] providers in Japan, supporting mobile access from light-weight clients requires servers to maintain and update state variables for large numbers of sessions. For purposes of brevity and clarity, a complete detailed listing of citations to references [1]-[20] is found at the rear portion of the specification. For example, "flash crowds" of thousands of mobile users are often seen in Tokyo during the evening transition from the downtown office area to the restaurant district.

The problem is, therefore, two-fold: one is providing video and audio content in a format that is dynamically tailored to the client's capabilities and the other is dynamically distributing the support for that streaming process to avoid unnecessary congestion and the resulting degradation in quality. Both parts of the solution should be done dynamically, since the factors on which they depend are themselves often changing quickly.

Unless media services are integrated and managed in a distributed fashion within a streaming content-delivery network (CDN) infrastructure, the potential of wireless devices for mobile streaming media (MSM) will not be completely realized. We discuss background work on providing reliable, scalable media streaming across the existing network infrastructure in support of wireless and mobile streaming clients. We outline an approach to managed placement of media services by dynamic monitoring of the distributed resources available within the CDN. Trade-offs between resource monitoring approaches are also discussed. This is as a discussion of an exemplary implementation of and results from a service location manager (SLM) within our MSM-CDN testbed. Another discussion lists some related work in distributed media processing.

### ADAPTIVE STREAMING CONTENT DELIVERY TO MOBILE CLIENTS

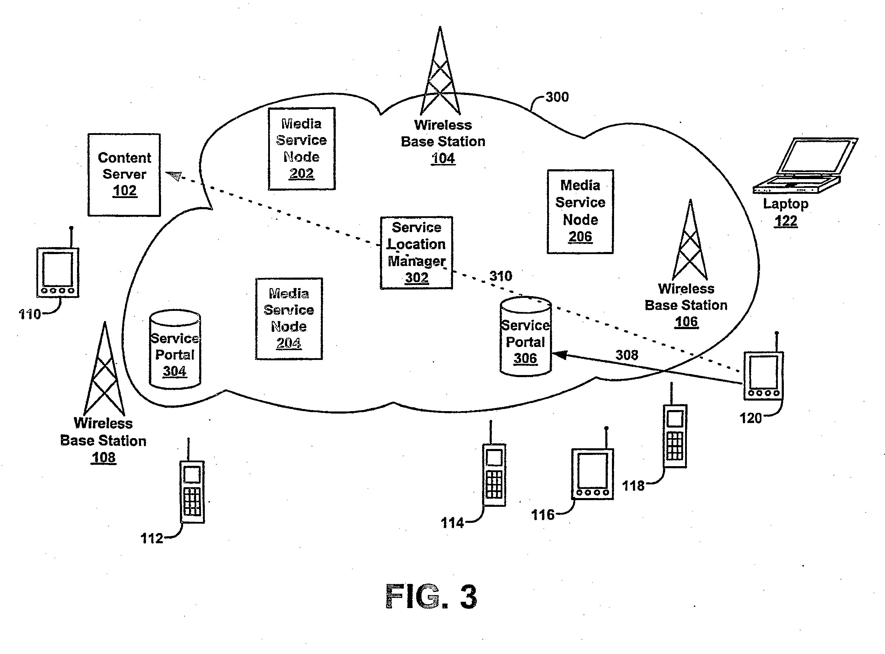

Within Figure 1, the basic components of a mobile streaming media system include streaming servers (e.g., 102) for stored media content, live streaming servers, and streaming media clients (e.g., 110-120). To deliver video clips to a large number of users in a scalable fashion, one can use an MSM-CDN overlay of the present invention as shown, for example, in Figure 3 on the existing network. It contains streaming edge (or surrogate) servers and management servers. The streaming edge servers have functionalities of content distribution and caching [16], streaming, resource monitoring, resource management, and signaling. They can also perform media-service functions such as live-media adaptation. The management servers distribute content and assign media sessions based on client location and current system and network load, in other words they assign client requested sessions to the best available edge servers.

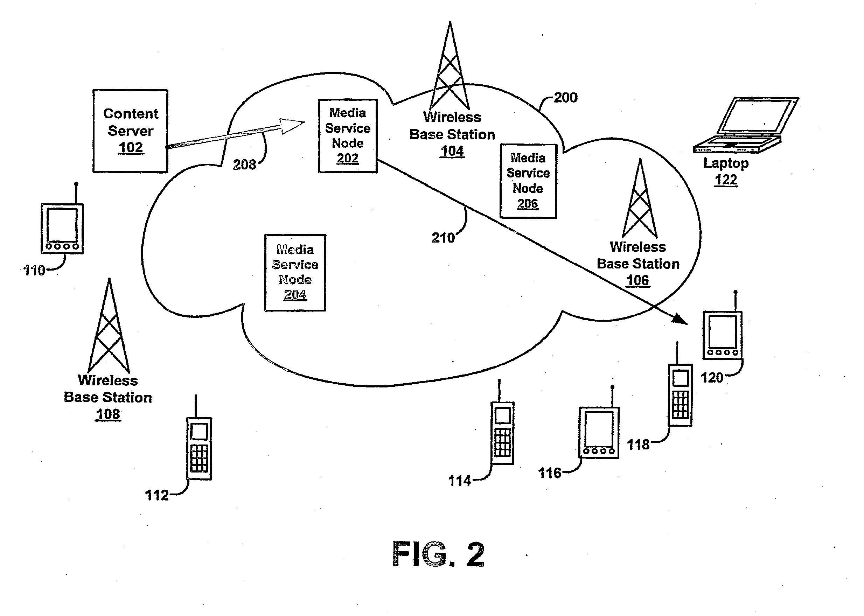

A MSM-CDN system should help support a wide variety of clients in terms of display and decode capabilities. Within Figure 1, a "traditional" way to do this is to store multiple copies of the source material on the content server 102 and to then select which copy to send (e.g., as shown by arrows 124, 126, 128 and 130) according to some initial negotiation with the client (e.g., 112, 114, 116 and 120). However, the reliability and bandwidth of a connection from various parts of the network 100 to the client will change during a streaming session as the client moves physical location and as streaming sessions from other clients begin and end within the shared wireless environment. This negotiation needs to span a wider range of options than is easily provided by multiple stored encodings and that the negotiation process should be dynamically updated as the network conditions change. Since real-time media services are both practical and affordable on today's network-server machines, this wide range of needs in media rates, sizes, and bandwidths can be met by embedding media services within the network 200 of Figure 2. Within Figure 2, arrow 208 indicates streaming media output from content server 102 to media service node 202 while arrow 210 indicates the processed media streaming from service node 202 to client 102. It is noted that network 100 of Figure 1 and network 200 of Figure 2 include wireless base stations 104, 106 and 108 that can be utilized as part of wireless communication with mobile client devices 110, 112, 114, 116, 118, 120 and 122.

Providing this real-time, low-latency media serving is one of the key functions of the edge servers [2, 7] also referred to as media service nodes. The media service process can, for example, adapt a compressed video stream to the client display. It can also use RTCP-based feedback to dynamically adjust the bit rate within the stream to the changing bandwidth conditions experienced by the client device. These real-time media servicing can now be provided on standard desktop or server machines, due to the use of compressed-domain processing [14, 15, 10].

These new compressed-domain servicing techniques can greatly reduce the computational cost of each individual servicing session, thereby making mobile streaming both practical and affordable. However, as with content management, the size and duration of the media service streams and the computational demands associated with modifying those streams may involve careful management. In the presence of thousands or millions of mobile clients (e.g., 110, 112, 114, 116, 118 and 120), computationally powerful servers can be dispersed throughout the infrastructure so that media services can be provided as a distributed edge service.

For example, one way to provide the media services called for by the previous discussion would be for each content server to provide static redirection of the client browsers (e.g., 110, 112, 114, 116, 118 and 120) to a fixed media service node (e.g., 202, 204 or 206 of Figure 2). This type of static redirection is well explored in terms of content delivery: redirections to local "mirror" sites are done routinely in today's web environment. The disadvantage of this static redirection is that it does not take into account any of the dynamics of the network 100 and server loads. The bandwidth and computational load available at various nodes (or servers) will change according to changing requirements of the client and of newly added or dropped clients. Thus, the placement of the media service processes on the different servers should itself be dynamic and, preferably, adjusted as the client processor changes physical location. Finally, for ease of use by the mobile web-browsing public, all of these dynamic decisions can be hidden and automatic.

### Service Location Management (SLM)

Within Figure 3, the idea behind dynamic service location management is to provide the flexibility required in a mobile streaming environment without requiring the mobile user (e.g., 110, 112, 114, 116, 118 and 120) to change the initial contact site. The general system instead provides some number of well-published portal sites (e.g., 304 and 306). These portals are the first point of contact for the mobile user (as shown by arrow 308) and accept redirection to an original content site (shown by arrow 310 to content server 102). All subsequent redirection is done in a client-transparent manner, using dynamic SMIL rewriting [16].

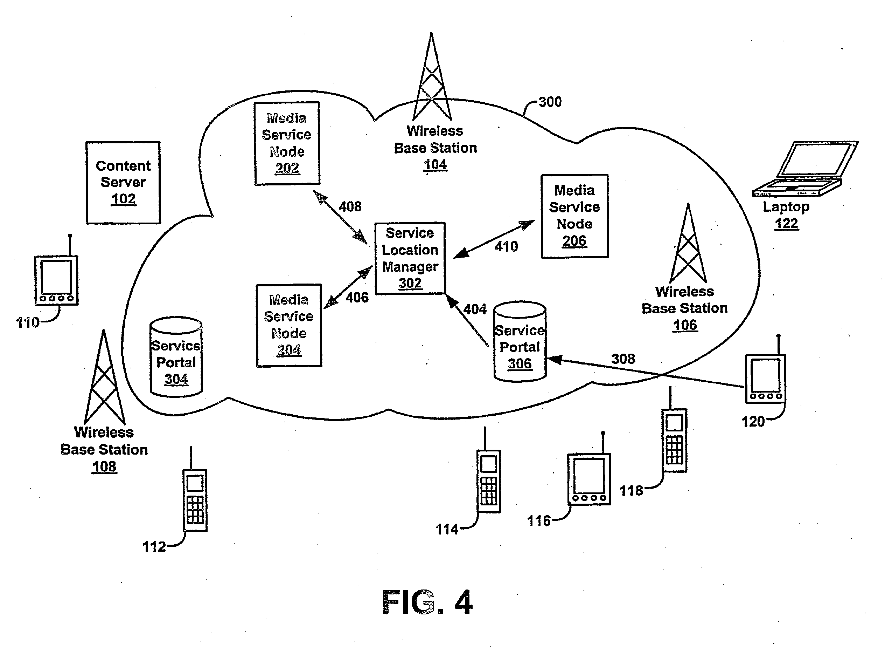

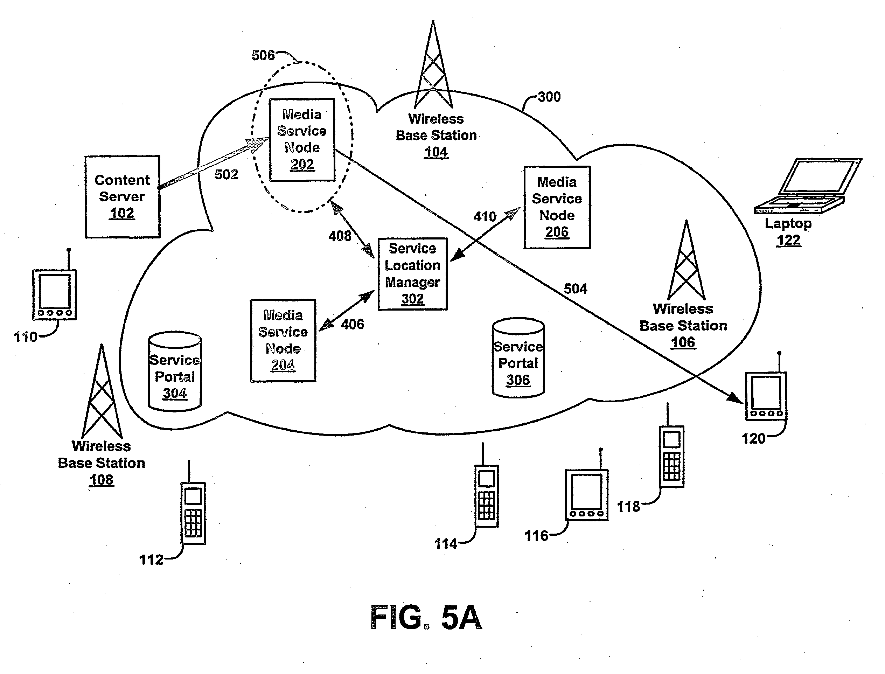

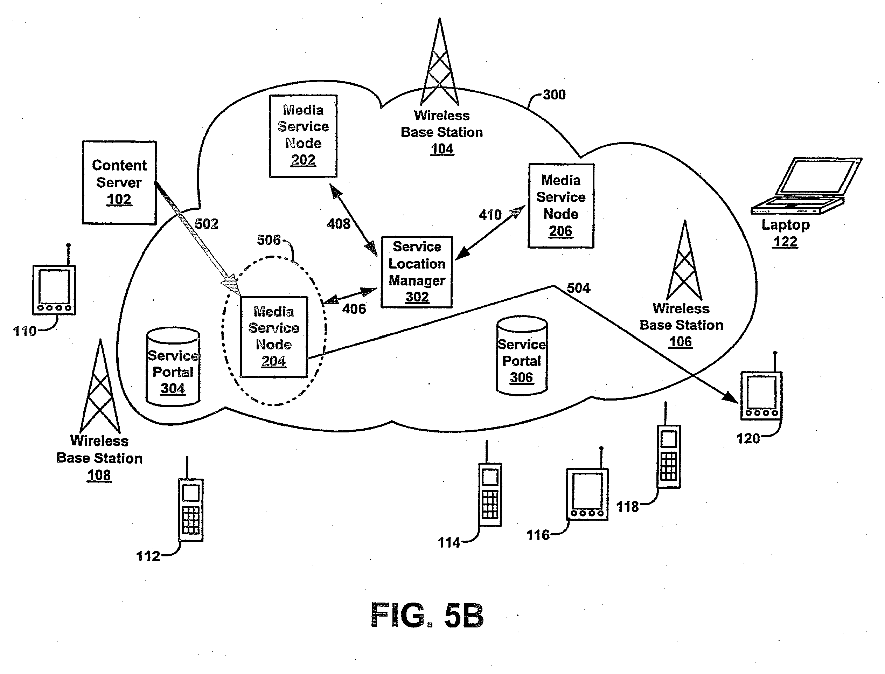

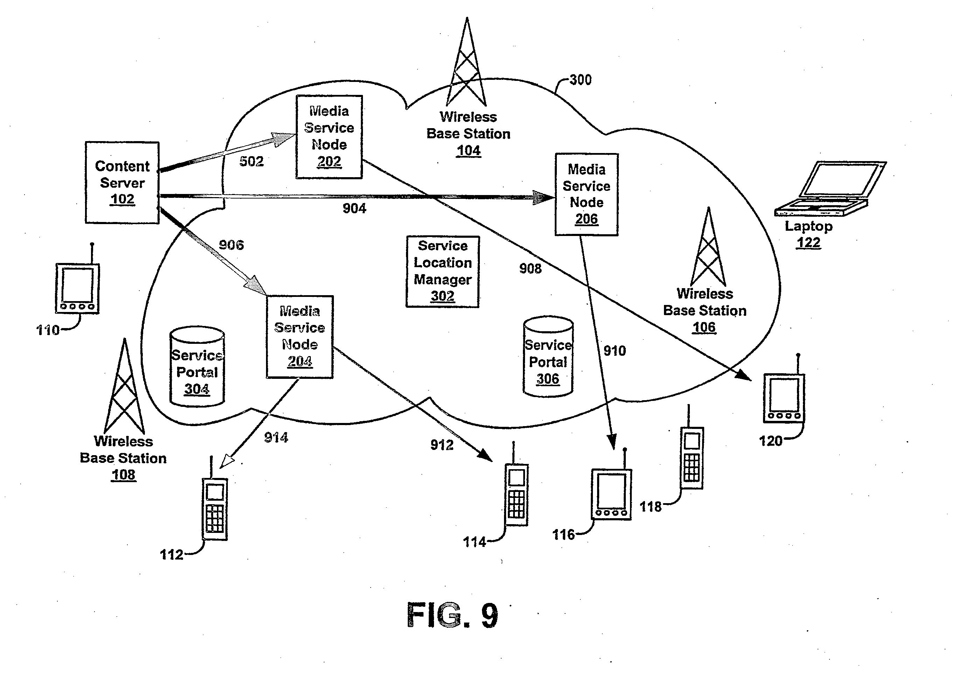

In general, Figure 3 shows with arrow 308 the request from the client device 120 coming into the service portal 306. As such, the service portal 306 in Figure 4 then communicates with the service location manager 302 (as shown by arrow 404) to find out the best service node to place the requested streaming media session. Figure 4 also shows that the service location manager 302 is watching over or monitoring the set of media service nodes 202, 204 and 206 which is shown by two headed arrows 406, 408 and 410. The service location manager 302 returns to the service portal 306 the best service node to place the streaming session on. As such, Figures 3,4 and 5 illustrates the operations of how to get a session started. Figure 9 indicates that when subsequent requests are placed within network 300, they would ) each go through those same operations. Figures 5A and 5B illustrate that the service location manager 302 can change the allocation of a current session as indicated by dashed oval 506 from one service node (e.g., 202) to another service node (e.g., 204). It is noted that the media service nodes (e.g., 202, 204 and 206) can each be implemented as hardware, software or any combination of hardware and software. Additionally, a service node (e.g., 202, 204 or 206) may be implemented as one or more physical computing devices.

Within Figure 4, once contacted by a client 120 as shown by arrow 308, the portal site 306 contacts the service location manager (SLM) 302 as shown by arrow 404. It is noted that a single SLM 302 can have multiple types of services in its available services portfolio. As such, the SLM 302 keeps track (e.g., with a table) of the services that each media service node (e.g., 202, 204 or 206) can perform on a stream of media. The media services can include video processing such as, but not limited to, transcoding, jitter removal, dynamic clipping based on facial recognition, video analysis, resizing of the video, OCR from video, audio enhancement, background removal, anything that can operate on a stream of video media, and the like. Additionally, the media services can include audio processing such as, but not limited to, background removal, audio speed up or slow down, audio enhancement, noise reduction, speech recognition, audio analysis, anything that can operate on a stream of audio media, and the like. And then when the SLM 302 is making its decision, it looks through that table to find out which service node or nodes can perform a particular requested media service.

Once the portal site 306 contacts the SLM 302, the SLM 302 then determines what type of media service is needed to serve the requested material to the given client (e.g., 120) and examines the status of the media service nodes (e.g., 202, 204 and 206) that are (partially or completely) under its control. That status can be summarized in terms of available cycles and available memory on each of the media service nodes. Additional status indicators can include the expected bandwidth and reliability of connections from each of the media service nodes to the content provider (or the nearest mirror site) and to the streaming client. Based on the collected status information, the SLM 302 dynamically generates a SMIL file, redirecting the client to the appropriate service node by embedding its URL, along with any negotiated parameters, in that newly generated SMIL response (Figure 5). The 3GPP or ISMA [5] compliant streaming client then parses the rewritten SMIL file to set up the appropriate streaming session with the content server 102 and media service node 202. Thus the whole processing is transparent to the end user. It is noted that arrow 502 indicates the streaming of media from content server 102 to media service node 202 while arrow 504 indicates the streaming of the processed media stream from service node 202 to client 120. Subsequent content requests from other clients that involve media servicing are also distributed according to the newly current network and computational resources (Figure 9).

### Resource Monitoring for Dynamic Service Location

In the above description, the SLM 302 examines the status of each of the media service nodes (e.g., 202, 204 and 206) that is under its control to determine how best to dispatch the media service task required by the current client request. There are various ways that this examination can be completed. The following details some different embodiment that may be implemented in accordance with the present invention.

### Basic "poll-based" monitoring

Within one embodiment, one approach to monitoring the status of media service nodes (e.g., 202, 204 and 206) under the control of the SLM 302 is for the process to be "poll-based." In this approach, whenever the SLM 302 gets a new client request for media services, it actively contacts each of the service nodes that may have adequate resources (e.g., in terms of number and clock speeds of its CPUs, its installed memory, and its best-case network bandwidth). In response to this "resource poll", each service node (e.g., 202, 204 or 206) provides a description of its currently available resources. This may include the number of free compute cycles and the amount of free memory at a given point in time. Ideally, it would also include some estimate of the free network bandwidth to the content server 102 and to the client (e.g., 110-120). The SLM 302 collects this information and may then dispatch the requested media service task to whichever service node provides the best combination of free network-bandwidth, computational, and memory resources.

This "poll-based" approach has the advantage of providing up-to-date snapshots of the free service node resources. It also provides a clear indication of when a service node is out of service, either due to a network or machine failure. On the other hand, poll-based resource monitoring has serious limitations in terms of extensibility. As the number of client requests and the number of monitored media service nodes grows, the number of polling requests grows as their product. Since the number of monitored media service nodes will tend to grow in direct proportion to the number of client requests for services, the number of polling requests effectively grows as the square of the number of clients.

### Basic "table-based" monitoring

An alternative to the polling embodiment is for resource information to be "pushed" from the media service nodes (e.g., 202, 204 and 206) to the monitoring SLM 302. In this approach, updates are provided on a periodic basis by a service-location supervisor (SLS), that may be a light-weight background daemon running on each media service node, such as provided by system and network management software. On each client request, the SLM 302 accesses the free-resource database created from collecting (and dating) the SLS-provided information. This reduces the connection requirements incurred by resource monitoring from a quadratic dependence to a linear dependence on the number of media service nodes.

Furthermore, monitoring and "re-launch" capabilities could be included in the SLM 302 itself: a simple SLM daemon would monitor the timestamps of the latest SLS database refreshes and attempt to contact SLS machines that are out-of-touch for more than some preset time interval. Presumably, a fair portion of these contact attempts will fail, due to an ongoing network or media service node failure. However, since these attempts to relaunch SLS contact would be done asynchronously, they will not affect the response time of the SLM 302 to client requests.

Table-based monitoring has the disadvantage of relying on resource information that is more out of date than direct poll-based results. This weakness is addressed by the next embodiment of resource monitoring.

### Adaptability Of SLM Based On Recent Data Received From Nodes And Actions Of SLM

### Enhanced "table-based" monitoring

Within this embodiment, the table-based monitoring approach is modified to reduce the drawback of out-of-date information. This is done by having the SLM 302 maintain a short-term record of the media service nodes to which it has dispatched recent client tasks. The SLM 302 then adjusts its prediction of what resources will be available for new jobs accordingly. For example, when a media service task was dispatched to a media service node less than 1 minute before the resource statistics where last transmitted from that service node, the resource record of that node would be lowered by a resource budget requested by that previously dispatched media service job.

### Multiple SLMs With Shared Services

If some of the media service nodes are under the purview of more than one SLM (that is, if more than one of a distributed set of SLM machines is allowed to redirect media service requests to that service node), then each SLM should also propagate information about dispatched jobs to the SLS daemon on that media service node as soon as the dispatch occurs. That way, the SLS daemon can retransmit all dispatch notifications on to the other SLM processors, thereby minimizing the number of times that media service node computational or network resources are over-booked due to crossing dispatches from the different SLMs.

It is noted that by having one or more SLMs with shared services, it allows regional segmentation where there are service nodes that could operate within 2 or more different organizations or groups. As such, it is desirable to give the SLMs the ability to assign service requests to that service node. Additionally, in this manner the overloading of the SLMs can be avoided by not removing a service node from each SLM's purview. Enabling multiple SLMs to share services may be practical when services coupling within an organization, group or business lends itself to sharing services. Additionally, the sharing of services between SLMs can provide fault tolerance if one of the SLMs becomes inoperable. Furthermore, the sharing of services between SLMs can provide load balancing to the SLMs.

It is noted that in order to reduce the drawback of out of date information, the SLM 302 can maintain a short term record of the service nodes that it has dispatched recent tasks to. So within this type of "push" based monitoring, the service nodes are pushing their data to the SLM 302 which can happen with a certain periodicity. Each of the statistics that is being sent by the service nodes (e.g., 202, 204 and 206) has a certain latency in it as well by doing the averaging. So what happens at the SLM 302, when it dispatches something it keeps a running table of its own service nodes dispatches with the information of what resources previously dispatched jobs will or are expected to take. In this fashion, when SLM 302 does its next dispatch, it can use the statistics in its tables from the service nodes and understand how old those statistics are. As such, SLM 302 is able to know that any dispatches that have occurred since those statistics were received are not reflected at all in those statistics. It is noted that SLM 302 can do a linear interpolation at some point to get the correct approximation for what it would expect the actual available resources are at each service node.

The SLM 302 has this table that is available and it is time dated indicating its last update from a given service node (e.g., 202). If the last statistics that SLM 302 has from that service node is say 10 minutes old and the SLM 302 is expecting updates every 5 minutes, then SLM 302 can determine and conclude that something is wrong relative to that service node. The problem can be several things, for example, it could be the network 300 has failed, the service node 202 has failed, or the SLS daemon has died on that service node 202. Therefore, the reporting by nodes to SLM 302 can provide this information or the SLM 302 could do a typical round-robin check on all of the service nodes in its table as a background process that is low overhead. In this manner, SLM 302 can be aware of problems that may be associated with one or more of the service nodes. If a problem is detected, SLM 302 can try to re-start the SLS daemon on that service node or if the SLM 302 can't contact the node, the SLM 302 can raise a flag with an Open View monitoring system indicating a problem with that particular node. It is noted that by performing this functionality, SLM 302 will not dispatch or assign a streaming session to a media service node that may be inoperative.

### Testbed Results

One embodiment of the service location management architecture was designed to integrate media services with a mobile streaming media delivery system. A mobile streaming media (MSM) testbed was designed, developed, and implemented to demonstrate these capabilities. The MSM testbed consists of a number of stored-content and live-content streaming servers and streaming media clients. Streaming edge servers and management servers together form an adaptive MSM-CDN. The streaming edge servers provide support for content distribution and caching, streaming, resource monitoring, resource management, and signaling. In addition, they perform media service functions such as live-stream splitting (or application-layer multicast of media streaming sessions) and real-time media transcoding of MPEG-4 video streams.

The streaming servers, clients, and edge servers may be compliant with 3GPP standards, and therefore may use the Session Description Protocol (SDP) [4], Real Time Streaming Protocol (RTSP) [13], and Realtime Transport Protocol (RTP) [12] and may support the MPEG-4 [8] video and Audio/Modem Riser (AMR) audio media standards. The streaming edge servers and management servers may use the Simple Object Access Protocol (SOAP) [3] for signaling. It is noted that other standards may be utilized in accordance with the present embodiment.

The service location manager (SLM) 302 assigns client-requested streaming/media service sessions to "best available" streaming edge nodes based on network and system resource usage. The SLM 302 collects statistics on a set of streaming edge nodes, analyzes those statistics to choose the best available edge service node, and conveys the chosen edge node in response to client requests. The SLM 302 uses SOAP/XML signaling to gather resource usage statistics from edge nodes and to dynamically convey the chosen edge node to the requesting client.

Each of the three proposed approaches to SLM 302 resource monitoring was implemented and tested in our MSM-CDN testbed. The poll-based monitoring occasionally resulted in complete streaming failure. This would happen when the response time-out period on the mobile client was set too low, so that the SLM 302 did not have adequate time to collect all of the poll responses, process them, and provide the dynamically generated SMIL responses before the client gave up. These too-slow responses would typically happen when one or more of the media service nodes was off the network: in these cases, the SLM 302 waited for a standard SOAP timeout period before disregarding that service node as a potential media service platform for the client. The delays associated with poll-based monitoring also do not gracefully support scaling of the network: as the number of monitored service nodes increases, the delay associated with polling increases proportionally.

The basic table-based monitoring did not suffer from this timed-out failure mode. However, it often resulted in sub-optimal load balancing. This occurred when client requests came in quick succession. Even if the SLS on the media service node was modified to update free-resource information contained in the SLM 302 database whenever it saw a new local media service task, this sub-optimal load balancing still occurred. Sometimes, this sub-optimal task assignment was due to the latency in the free-resource statistics response to a newly instantiated task. More often, the sub-optimal task assignment was due to new client requests arriving after the SLM 302 dispatched a media service task to a particular service node (by transmitting the dynamic SMIL file to the client) but before that earlier client actually established that media service task on the selected service node (by transmitting a RTSP SETUP request).

The enhanced table-based monitoring avoided both the timed-out failures seen with the poll-based monitoring and the interleaved-request mistakes seen with the basic table-based monitoring.

### SLM For Managing Of Handoffs Of Media Services

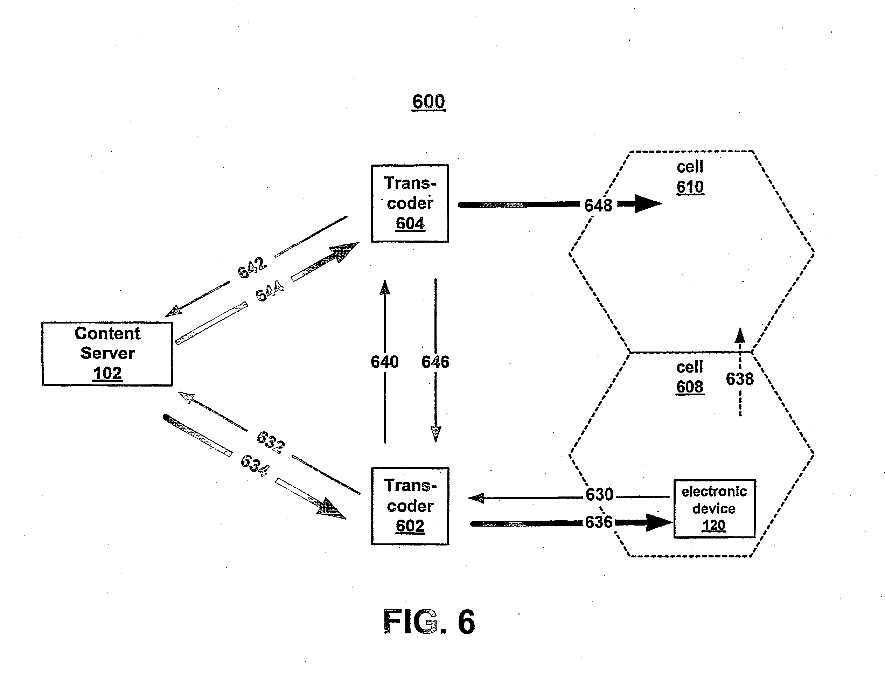

Figures 5A and 5B illustrate one embodiment in accordance with the present invention. Specifically, service location manager 302 can be used to move a media streaming session (indicated by dashed oval 506) from one media service node (e.g., 202 shown in Figure 5A) to a separate media service node (e.g., 204 shown in Figure 5B) which can be referred to as a handoff. For example, if service node 202 determines it needs to handoff the streaming media session (or if some other component of network 300 determines this), this information can be communicated to the SLM 302. The SLM 302 can then at that time compute the service node loads, the network 300 load, etc. in order to figure out which service node to handoff that particular streaming session. In this manner, a pre-defined handoff node does not need to be determined. Instead, it is determined on-the-fly by SLM 302. As such, the best media service node that can perform the desired service is chosen by the SLM 302. Then the handoff may occur in a manner similar to that described in Figures 6, 7, 8A and 8B. It is noted that how the handoff is performed can be specific to the type of service being performed by the initial service node (e.g., 202).

Figure 6 is a block diagram of an exemplary system 600 for data session handoff having a single content server 102 upon which embodiments of the present invention may be practiced. It is noted that system 600 involves transcoding as an exemplary media service that may be involved in a data session handoff. It is understood that the system 600 can involve any media service and is not limited to transcoding. In one embodiment, in system 600, data (e.g., video media) is streamed to a mobile client (e.g., an electronic device) via a wireless link. In one embodiment, the data is streaming data that is structured and processed in a continuous flow, such as streaming audio and streaming video. Streaming data comprises a plurality of data packets (e.g., portions), wherein each packet is ordered in the flow.

In one embodiment, system 600 comprises a content server 102 (e.g., a data source), transcoder devices 602 and 604, and electronic device 120. In one embodiment, transcoder 602 is operable to serve media streams to electronic devices located in cell 608, and transcoder 604 is operable to serve media streams to electronic devices located in cell 610. In the present embodiment, content server 102 generates a high-bitrate, high-resolution video stream that is sent to transcoder 602. Transcoder 602 transcodes the video streams into a lower-bitrate, medium resolution video stream which is then sent to electronic device 120.

For purposes of the present application, in one embodiment transcoder 602 is referred to as a first transcoder and transcoder 604 is referred to as a second transcoder. In another embodiment, transcoder 602 is referred to as a second transcoder and transcoder 604 is referred to as a first transcoder. For purposes of brevity and clarity, embodiments of the present invention are described herein with reference to transcoder 602 and transcoder 604.

In one embodiment, electronic device 120 is a mobile device. In the present embodiment, electronic device 120 is any device configured to receive data over a wireless connection, including, but not limited to laptop computers, palmtop computer systems, cellular telephones, and the like.

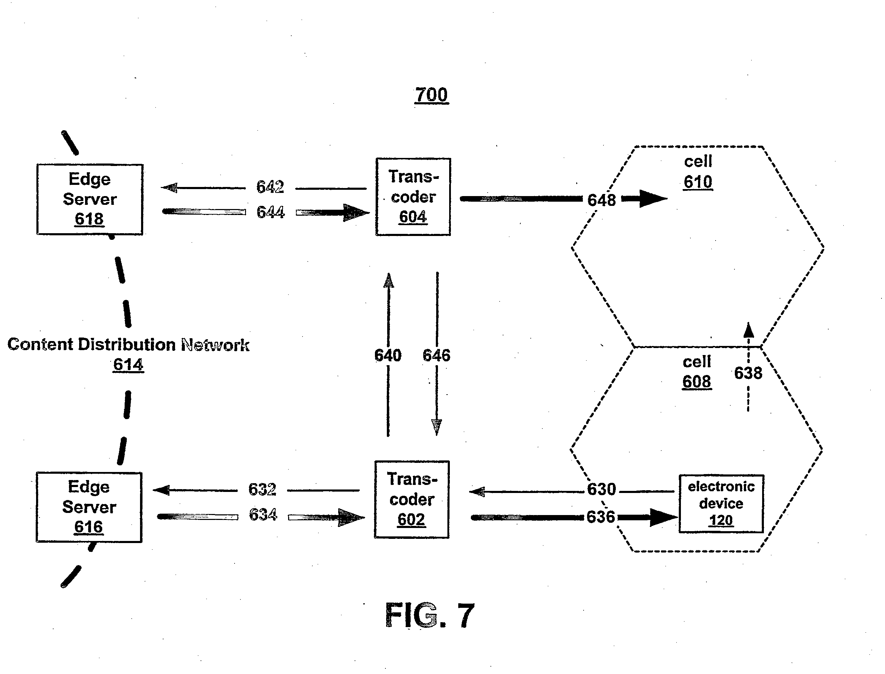

Figure 7 is a block diagram of an exemplary system 700 for data session handoff having a content distribution network 614 upon which embodiments of the present invention may be practiced. It is noted that system 700 involves transcoding as an exemplary media service that may be involved in a data session handoff. It is understood that the system 700 can involve any media service and is not limited to transcoding. In one embodiment, in system 700, data (e.g., video media) is streamed to mobile clients (e.g., mobile electronic devices) via a wireless link. In one embodiment, the data is streaming data that is structured and processed in a continuous flow, such as streaming audio and streaming video.

In one embodiment, system 700 comprises a content distribution network 614 (e.g., a data source), transcoder devices 602 and 604, and electronic device 120. In one embodiment, transcoder 602 is operable to serve media streams to electronic devices located in cell 608, and transcoder 604 is operable to serve media streams to electronic devices located in cell 610. Content distribution network 614 comprises a plurality of edge servers (e.g., edge servers 616 and 618). Edge servers 616 and 618 are geographically distributed such that they are each intended to serve media to mobile clients geographically proximate to them, cutting down on network overhead. In the present embodiment, edge server 616 generates a full-bitrate, high-resolution video stream that is sent to transcoder 602. Transcoder 602 transcodes the video streams into a lower-bitrate, medium resolution video stream which is then sent to electronic device 120.

In one embodiment, electronic device 120 is a mobile device. In the present embodiment, electronic device 120 is any device configured to receive data over a wireless connection, including, but not limited to laptop computers, palmtop computer systems, cellular telephones, and the like.

Referring to Figures 6 and 7, both system 600 and system 700 use transcoders 602 and 604 to transcode video streams into lower bitrate streams that match the display capabilities of the target electronic device (e.g., electronic device 120).

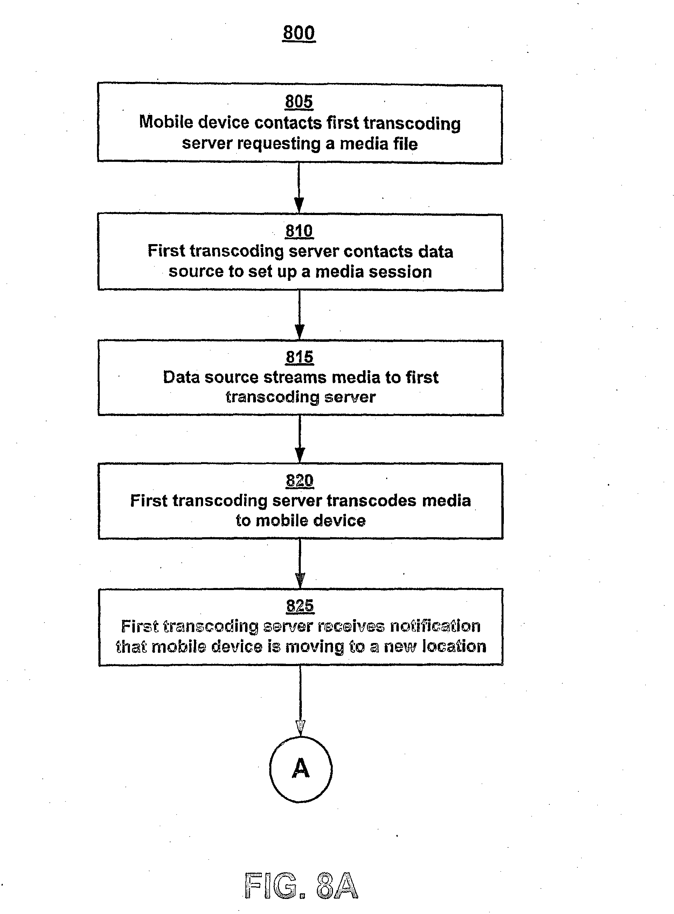

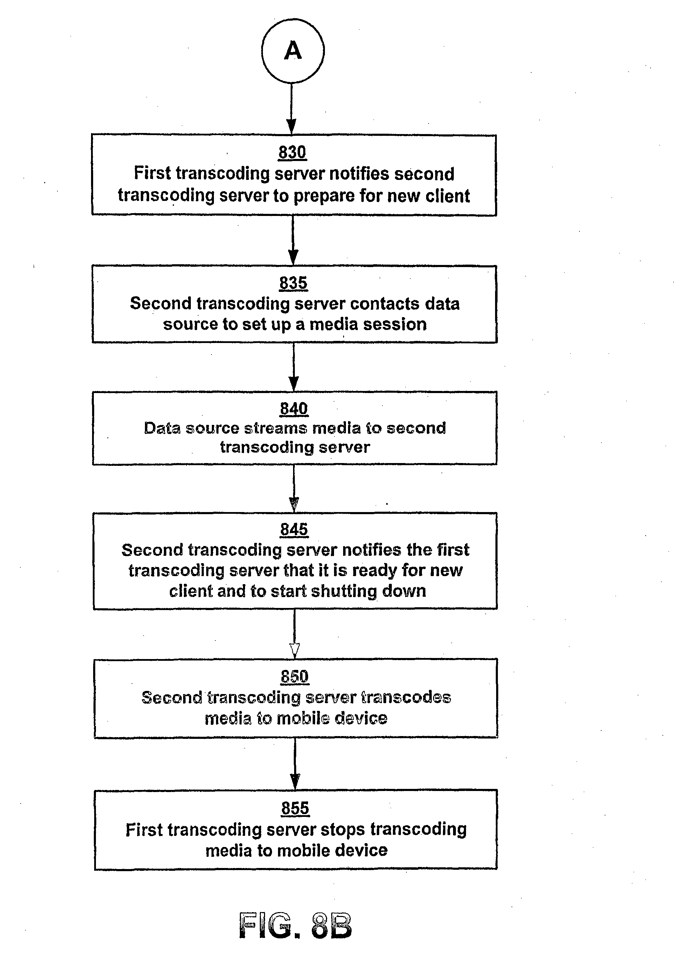

In one implementation, content server 102 or edge server 616 transmits a full-bitrate media stream to transcoder 602, wherein transcoder 2602 transcodes media to electronic devices located in cell 608. It should be appreciated that in one embodiment content server 102 is an edge server. Transcoder 602 then transcodes the media stream into a lower-bitrate stream and transmits the stream to electronic device 120. Upon transcoder 602 receiving notification that electronic device 120 is moving towards another cell, transcoder 602 initiates a handoff operation with another transcoder serving the new cell. The handoff process is discussed in extensive detail below at process 800 of Figures 8A and 8B.

In one embodiment, the handoff is accomplished under the control and direction of a centralized node such as service location manager 302. It is understood that another entity (e.g., a dedicated handoff manager) can perform this function instead. In one embodiment, service node 202 specifies handoff information used to transfer the media session to another service node. In one such embodiment, the handoff information is forwarded to service location manager 302. Service location manager 302 can then select a service node (e.g., service node 204) that will receive the media session handoff, and forward the handoff information to that service node. In another embodiment, service location manager 302 can identify the service node that will receive the media session handoff, and direct service node 202 to communicate the handoff information directly to that service node.

Figures 8A and 8B is a flowchart illustrating a process 800 of data session handoff in accordance with one embodiment of the present invention. In one embodiment, process 800 is implemented in a transcoder device (e.g., transcoder device 602 or 604) as computer-readable program instructions stored in memory and executed by a controller. Although specific operations are disclosed in Figures 8A and 8B, such operations are exemplary. That is, the invention is well suited to performing various other operations or variations of the operations recited in Figures 8A and 8B.

At operation 805 of process 800, a mobile device (e.g., electronic device 120 of Figure 6) contacts a transcoder (e.g., transcoder 602 of Figure 6) requesting a media file (e.g., data). In one embodiment, transcoder 602 is operable to serve media to electronic devices located within cell 608. In one embodiment, the mobile device contacts the closest transcoder requesting a media file. In one embodiment, the mobile device contacts the transcoder by sending a message. In one embodiment, the message is a transmission control protocol (TCP) message. Operation 805 is graphically represented in Figures 6 and 7 as arrow 630.

At operation 810, transcoder 602 contacts a data source (e.g., content server 102 or content distribution network 614) to set up a media session. In one embodiment, transcoder 602 contacts the data source (e.g., content server 102 of Figure 6 or content distribution network 614 of Figure 7) by sending a message. In one embodiment, the message is a TCP message. Operation 810 is graphically represented in Figures 6 and 7 as arrow 632.

At operation 815, the data source starts streaming the requested media to transcoder 602. In one embodiment, the requested media is transmitted using user datagram protocol (UDP). Operation 815 is graphically represented in Figures 6 and 7 as arrow 634.

At operation 820, transcoder 602 transcodes the streaming media down to electronic device 120. Operation 820 is graphically represented in Figures 6 and 7 as arrow 636.

At operation 825, transcoder 602 is informed that electronic device 120 is moving to a new location (e.g., cell 610). In one embodiment, electronic device 120 communicates the move to a new location directly to transcoder 602. In another embodiment, notification of the move is communicated to transcoder 602 by a camera located proximate to electronic device 120 and monitoring electronic device 120 for movement. In another embodiment, electronic device 120 moving to a new location is predicted by a computer system based on monitored behavior of electronic device 120. In another embodiment, electronic device 120 moving to a new location is determined based on a global positioning system resident within electronic device 120 that is monitored by transcoder 602. It should be appreciated that transcoder 602 can be made aware of the movement of electronic device 120 to a new location by any method. The movement of electronic device 120 from cell 608 to cell 610 is graphically represented in Figures 6 and 7 as arrow 636.

At operation 830, transcoder 602 sends a handoff message to a transcoder (e.g., transcoder 604) proximate to cell 610, notifying transcoder 604 to prepare to stream the media to electronic device 120. In one embodiment, the handoff message comprises transcoding information (e.g., display size and bandwidth size of electronic device 120) and a sequence header (e.g., the current byte location of the data stream). The sequence header indicates which portion of the media stream currently being transmitted to electronic device 120. In one embodiment, transcoder 602 notifies transcoder 604 by sending a message. In one embodiment, the message is a TCP message. Operation 830 is graphically represented in Figures 6 and 7 as arrow 638.

At operation 835, transcoder 604 contacts the data source to set up a media session. In one embodiment, the media session is requested based on the sequence header received at operation 830. By beginning the media session at the bit location indicated in the sequence header, electronic device 120 receives a seamless media session even while switching transcoders. In one embodiment, transcoder 604 notifies the data source by sending a message. In one embodiment, the message is a TCP message. Operation 835 is graphically represented in Figures 6 and 7 as arrow 640.

At operation 840, the data source starts streaming the requested media to transcoder 604. In one embodiment, as recited above, the media session is transcoded to electronic device 120 beginning at the bit location indicated in the sequence header, providing electronic device 120 with a seamless media session. In one embodiment, the requested media is transmitted using UDP. Operation 840 is graphically represented in Figures 6 and 7 as arrow 642.

At operation 845, transcoder 604 notifies transcoder 602 that it is ready to communicate with electronic device 120 and that transcoder 602 can shut off communication with electronic device 120. In one embodiment, transcoder 604 notifies transcoder 602 by sending a message. In one embodiment, the message is a TCP message. Operation 845 is graphically represented in Figures 6 and 7 as arrow 644.

At operation 850, transcoder 604 transcodes the streaming media down to electronic device 120. As described above, the streaming media is presented to electronic device 120 in a seamless fashion, beginning the transcoding at the location indicated in the sequence header received at operation 830. Operation 850 is graphically represented in Figures 6 and 7 as arrow 648.

At operation 855, transcoder 602 stops transcoding media to electronic device 120.

### Related Work

The Degas system allows user defined media processing using programmable media gateways [9]. Programs, called deglets, can be uploaded into the gateways using a declarative programming model. The Degas system involves a special client to interact with the media gateways. On the other hand, the SLM system described herein can be completely transparent to a 3GPP compliant client. The Degas system tries to locate gateways optimally with respect to network bandwidth utilization and can dynamically migrate processing tasks when necessary. However resource management was not implemented. The system uses a multimedia software library to optimize code at the media gateway.

A content services network (CSN) was proposed in [7]. Video segmentation with keyframe extraction was used as a sample infrastructure service. Similar to our architecture, the CSN leverages an existing CDN to add computation (e.g., processing) as an infrastructure service. Services Distribution and Management (SDM) servers are used to maintain information about the services in the network and a history of server loads and client demographics. Redirection servers are placed at the network edge to send the processing request to an application proxy server. The proposed CSN uses DNS redirection to send the request to the nearest application proxy. In our architecture, this function is performed completely at the application level by dynamic SMIL rewriting. This eliminates the need for DNS-redirection capabilities from the infrastructure.

### Difference between CSN and SLM/MSA

* The CSN requires independent overlay infrastructure, it needs additional DNS redirect for service assignment process. The SLM embeds in the existing content delivery structure and the service request forwarding is performed completely at the application level by dynamic SMIL rewriting.
* The CSN uses a subscription model, either end user or content provider subscribe to specific services. The SLM does not need subscription from any party.
* In the CSN, once a service session is assigned to a service node, that node completes the session unless the node fails. The SLM can dynamically switch to different nodes in the middle of a service session.
* The CSN uses OPES which requires a service to be completed before the result can be served. The SLM enables streamed media service, that is, the result of the media service can be served in parallel when the service session is going on.
* The CSN does not disclose how to implement service management with dynamic service placement/session assignment. However, this is described herein with reference to the SLM.
* The CSN does not indicate how the "monitoring" of the APs (a.k.a. service nodes) is done, so there is no indication of whether or not the monitoring will be scalable or whether or not it will automatically detect node failures. The SLM can utilize push- or pull-based monitoring as described herein.
* The received monitoring statistics (however they are received) are modified to reflect recent dispatches by the SLM. The CSN does not teach this.

In summary, these media services are desirable to support a rapidly expanding and highly dynamic set of display, processor, and bandwidth restrictions presented by mobile devices as they move from place to place, as they start and stop background tasks, and as they adjust their processor and display parameters to allow for various power management strategies. The SLM solution outlined can effectively address the problem of load balancing a CPU intensive media processing task across multiple service nodes in the network. When a client accesses a well known portal site, the service location manager 302 dynamically routes the request to the least loaded service node. Furthermore, the transcoded streams are provided in a 3GPP compliant client-transparent manner from appropriate service nodes in the network.

This architecture may be extended to trigger application level hand-off of media service sessions for mobile clients as outlined in [6,11]. The SLM architecture is well suited to determine media services node that are close to the new client position. The ability to perform mid-session hand-off allows load balancing at a much finer granularity than previously described.

### EXEMPLARY ARCHITECTURE FOR COMPONENTIZED NETWORK-BASED MEDIA SERVICES

A Media Services Architecture (MSA) in accordance with an embodiment of the present invention can provide a flexible, general architecture for requesting, configuring, and running services that operate on streaming audio and video as it flows through a network. MSA decomposes requested media services into modular processing components that may be distributed to servers throughout the network and which can intercommunicate (e.g., via standard streaming protocols). Use of standard protocols also affords seamless inter-operability between MSA and media content delivery networks. MSA manages media services by monitoring the networked servers and assigning service components to them in a manner that uses available computational and network resources efficiently. It is noted that Componentization and network-delivery of services allows for rapid development of new and improved services, and promotes wide service availability and device compatibility, while greatly reducing the system maintenance burden on end users.

Within one embodiment the MSA extends componentized, web-based services to the domain of streaming rich media by decomposing complex media services into flexibly configured, network-based parts. This approach allows rapid development and simple maintenance of powerful new applications, and promotes scalability to large numbers of users. All of this is achieved without sacrificing ease-of-use from the perspective of the media service clients.

### Network-Based Media Services

Many types of analysis performed on audio, video, and other media in standalone systems can be integrated into a networked-processing architecture. For example, speech recognition, face detection and recognition, and audio de-noising can be simply moved off the local desktop to networked server machines with available bandwidth and processing power. In addition, the MSA makes practical new, high-value services available including:
Video compositing: Two or more video streams may be blended, image by image, according to masks to produce a single video stream with content from multiple sources. "Picture-in-picture" and "blue-screening" special effects are among the many applications. Video transcoding can be desirable to overcome mismatched formats, resolutions, and frame rates of the input streams.
Meeting summarization and transcription: When cameras and microphones are present in a meeting, the incoming audio and video streams can be collected in the network and processed with video and audio segmentation and voice and face recognition to produce an indexed record of the meeting. Additionally, automatic speech recognition (ASR), keyword spotting, and document gisting can be used to produce an indexed, annotated, and partially transcribed record of the meeting. These types of records can be used to quickly recall the meeting content at a later time.
Multi-source audio enhancement: When multiple audio streams are being captured from different microphones in a single room, such as in a meeting with several microphone-enabled Personal Digital Assistants (PDAs) or other electronic recording device, blind source separation may be applied to this ad-hoc microphone array to separate and de-noise speech from different participants.
Dynamic view selection: In live teleconferencing and webcast lecture applications, multiple cameras are often desirable for adequate coverage. The best camera view typically changes many times during the event. Analysis of the video and audio streams from the event can be used by a network-based service to automatically select the best video feed.

These types of media analysis are available today through local desktop processing. However, componentized services operating on media streams in the middle of the network offer many advantages over the traditional desktop model, including:
Improved application offerings: Developers can quickly distribute improved services by simply updating the MSA. New services are quickly created by mixing and matching components. Applications are available whenever users can reach the network, not just when they can access their own machines where the applications may be installed.
Reduced system administration: Because processing is performed in the network, end users need not worry about continuous installation and update difficulties on their own machines.
Facilitation of multi-stream processing: Many media-based applications, such as meeting summarization, involve multiple streams to be gathered for joint processing. When these streams do not arise from the same machine, it is usually much more efficient to process them mid-network.
Controlled computational environment: While individual users' machines may vary widely in their compute power, memory capacity, and operating systems, MSA machines can be standardized to a narrow range of specifications. Service components can be developed and optimized for these specifications, leading to more reliable overall application performance.
Efficient sharing of results: In many situations, such as the meeting summarization context, the processed media and analysis results desired by multiple users are nearly the same or identical. Rather than duplicate this processing on each user's machine, mid-network processing can perform overlapping computations once, and then distribute the results to each user. In short, network-based media processing services offer users the potential of much greater flexibility and functionality than current, local, media-centric applications, with reduced maintenance and reliability concerns.

### Media Services Architecture (MSA)

Embodiments of the MSA are focused on integrating with the media delivery architecture, and enabling media services in a highly flexible manner. Some features of the MSA may include:
Interoperability: seamless streaming interconnections between components using open interfaces and standards;
Modularity: modular service components allowing dynamic media service construction in the middle of the network; and
Manageability: efficient assignment of media services to computation and storage resources in a scalable manner.
The means by which the architecture may provide each of these features are discussed below.

### Seamless Interconnects for Streaming Inter-Operability

All inter-machine transport of media streams within the MSA, as well as between elements of the MSA and components of media content delivery networks (CDNs), can be conducted via uniform input and output modules that can be referred to as "Ears". Within one embodiment, the Ears rely on standards-based media streaming protocols, thereby easing integration of the MSA with CDNs and other streaming media applications. Both the input and output Ears can communicate with other networked machines via, but not limited to, the SDP protocol for describing multimedia, the Real-Time Streaming Protocol (RTSP) for session management and media playback control, and the Real-Time Protocol / Real-Time Control Protocol (RTP/RTCP) for transport of data under real-time constraints. A given Ear can manage one end (send or receive) of flow for a single media stream, but multiple Ears can be linked into the same, synchronized streaming session.

The Ears can also provide data compression and decompression functionality, so that multimedia flowing through the architecture can be inter-converted between the compressed formats often used for network transmission and the uncompressed format often demanded by media processing and analysis techniques. Input Ears can automatically detect the format of incoming media streams and recruit the appropriate decompression module to convert the data into forms suitable for media analysis. Output Ears can convert raw data streams into compressed formats suitable for network transport. Standard compression schemes supported can include, but are not limited to, Moving Pictures Experts Group (MPEG), MPEG-1, -2, and -4 video and Audio/Modem Riser (AMR) and WAV audio. It is noted that new formats can be added by registering the appropriate compression and decompression modules.

Finally, because media processing techniques may not operate at the same rate as the streaming media, the Ears can implement data buffering and flow control methods to smooth data rate mismatches. Circular buffering minimizes expensive data copying, and multi-threading efficiently services data requests from the network, the application, and the decompression and compression routines. Buffer overflow can be handled by selectable policies for dropping frames.

### Flexible, Modular Service Decomposition

An MSA service can be initiated by contacting a Service Portal with a simple, high-level Media Service Request. These requests can be made directly by a user device via a network such as the Internet, or they may be generated by applications run by the user device either locally or within the MSA. Each Request may contain the name of the service, such as "video compositing", along with any service parameters, such as source and destination Uniform Resource Locators (URLs).

These simple Media Service Requests hide the complexity of most media services from the requesting clients. For example, meeting summarization can employ speech recognition, face detection, video motion analysis, and voice identification, and each of these component techniques can, in turn, be divided into several sub-components. A given processing technique, on the other hand, may be a useful component in many different services. For these reasons, it is desirable to encapsulate media processing techniques into modular, re-usable components that are flexibly and dynamically combined.

Therefore each media service is structured as a graph of independent "Components" communicating through data streams. Each Component can encapsulate one or more "Sub-Component" processing techniques working tightly together. The Components for one media service can be dynamically placed on a single machine or distributed across the network. Since Components are well encapsulated, each can operate without concern for this distribution.

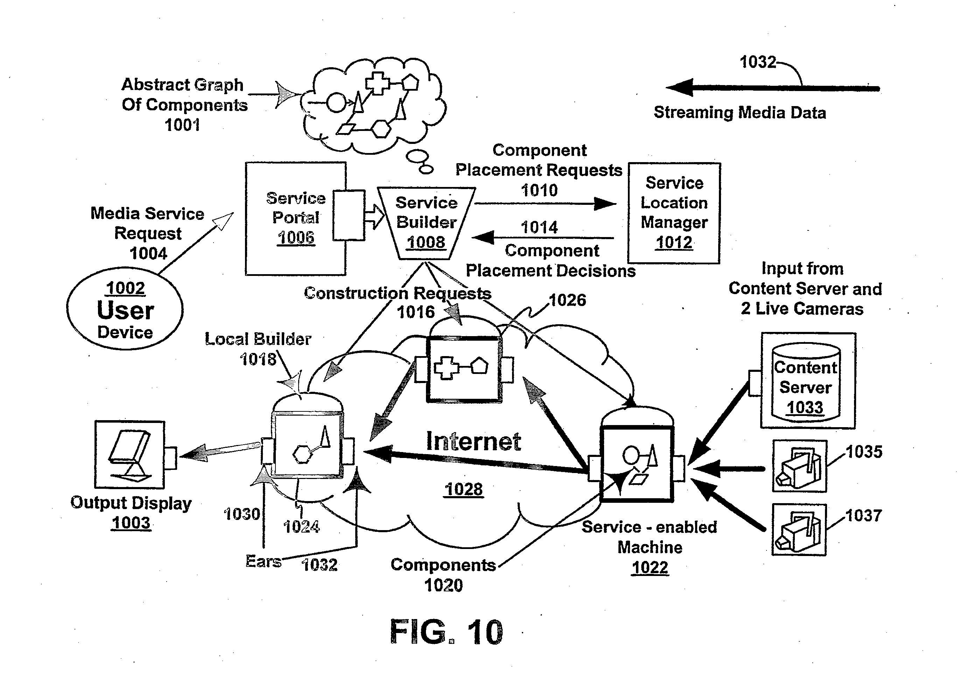

Figure 10 is block diagram illustrating exemplary operations by which a MSA decomposes and distributes services in accordance with an embodiment of the present invention. After receiving a Media Service Request 1004 issued by a user device 1002, a Service Portal 1006 starts up and runs a Service Builder 1008 to manage the Request's fulfillment. It is noted that each named media service can be associated with a different Service Builder (e.g., 1008), and each Service Builder knows the structure of an abstract graph of Components (e.g., 1001) that will implement that service. For each Component in this graph, the Service Builder 1008 sends a Component Placement Request 1010 to a "Service Location Manager" (SLM) 1012 to determine, as discussed herein, the networked service-enabled machine (e.g., 1022, 1024 or 1026) on which to run one or more Components. The SLM 1012 returns Component Placement Decisions 1014 to the Service Builder 1008 which can include specific URLs (with port numbers) for each input and output stream of each Component. The Service Builder 1008 groups these Decisions by selected service-enabled machine (e.g., 1022), and then sends to each selected machine one Construction Request 1016 via a network (e.g., the Internet 1028) listing desired Components 120 and their input and output URLs.

### LOCAL BUILDER

A "Local Builder" (e.g., 1018) runs on each MSA machine (e.g., 1022, 1024 and 1026) to service Construction Requests 1016. For a given Request 1016, the Local Builder 1018 can create each of the named Components, and uses the input and output URLs to instantiate Ears 1030 and 1032 to send and receive data between these Components and those on other machines (e.g., 1022 and 1026). In this manner, the Local Builder 1018 couples the service Components. The Local Builder 1018 also attempts to optimize each collection of inter-communicating Components running on a single machine (e.g., 1024), by eliminating identical Sub-Component processing done by more than one Component. Such duplication sometimes occurs when services are divided into reasonably-sized, reusable Components. This cost of service modularity is thus mitigated by the Local Builder's optimizations. After eliminating the redundant Sub-Component processing, the Local Builder redirects the input and output streams of the merged Components as needed in order to fulfill service processing.

Within Figure 10, after all Construction Requests 1016 are fulfilled, the service is ready to run. Components in the service graph closest to the data destination request media via, but not limited to, an RTSP PLAY command, thereby pulling data through the entire graph of connected Components. As such, the desired media flows from one or more sources (e.g., a content server 1033 and live cameras 1035 and 1037) and the selected service Components operate on the streaming media to eventually deliver the processed media to a destination (e.g., output display 1003). It is noted that arrows within Figure 10 that appear similar to arrow 1032 represent streaming media/data.

### Dynamic Service Location Management - Component(s) Placement

Many individual machines in the MSA network are capable of performing the underlying processing for media services. Therefore, for each Media Service Request (e.g., 1004), decisions can be made as to how to allocate MSA resources to best fulfill the request. To avoid unduly increasing the network load, these decisions can be based in part on the (network) proximity of various service-enabled machines (e.g., 1022, 1024 and/or 1026) to good paths between sources and destinations of the media streams. To provide services with minimal delay and highest quality, these decisions can also take into account the current processing load carried by each MSA media processor. Finally, when some Components of a service share Sub-Component processing, it may be preferable to group them on the same service-enabled machine (e.g., 1022, 1024 or 1026).

One way of making these decisions intelligently is to utilize "service location management" as described in [17]. The MSA contains Service Location Managers (SLMs), e.g., 1012, that determine where to place the individual Components that comprise a service. For a given Media Service Request (e.g., 1004), an SLM (e.g., 1012) places Components of the service one at a time, accounting for a number of factors described below, in an order defined by the associated Service Builder (e.g., 1008). Placement Decisions for Components may alternatively be made simultaneously, through joint optimization over all factors and all Components, although this is likely to be a complex, time-consuming procedure for even moderately sophisticated services. Placement Decisions for different Components may also, alternatively, be made entirely independently, although this could lead to inefficient data paths and duplicate Sub-Component processing. Instead, SLMs (e.g., 1012) can maintain tables of recent Component Placement Decisions, and base each new decision in part on this history.

For example, each Component Placement Decision can be based in part on previous Decisions for other Components of the same Service Request, so that Components that are coupled to each other in the abstract graph for the service may preferentially be placed on the same service-enabled machine (e.g., 1022) or on machines with high-bandwidth and/or low latency interconnection. It is noted that this basing of Component Placement Decisions on prior Decision history is a compromise between joint placement optimization over the entire graph of Components, which is likely an expensive process, and completely independent Placement Decisions, which may lead to overly complex data paths and failures to eliminate duplicate computation. As such, the SLM (e.g., 1012) may be allowed to optimize placement based on previous placement decisions, but may not attempt to optimize the assignment across the full graph of Components. Alternatively, it is noted that the SLM (e.g., 1012) may be allowed to optimize placement based on previous placement decisions and may attempt to optimize the assignment across the full graph of Components.

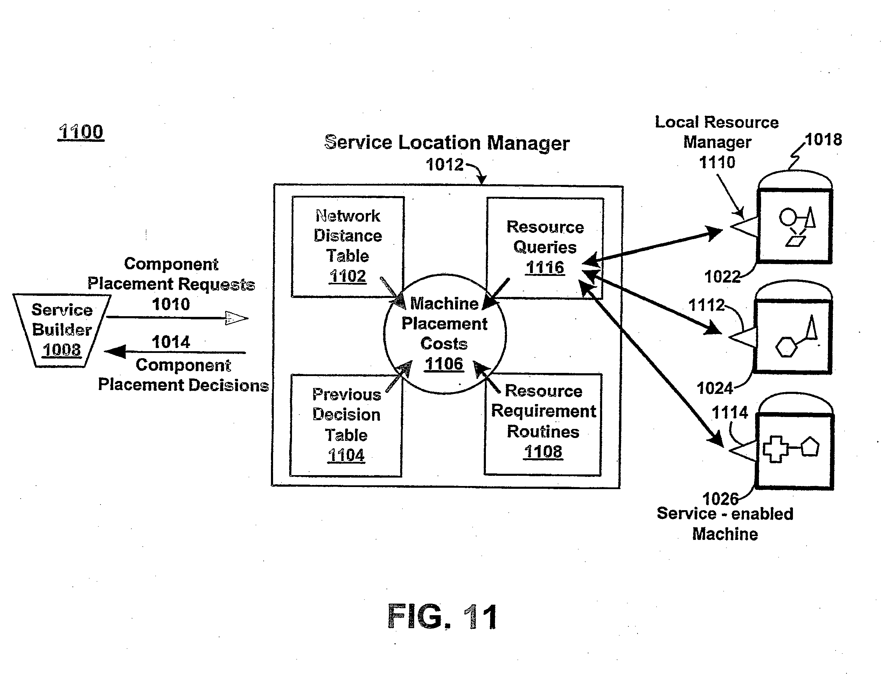

Figure 11 is a block diagram of a service location management methodology in accordance with an embodiment of the present embodiment. For each Component Placement Request 1010 sent by Service Builder 1008 to SLM 1012, the SLM 1012 can first select a pool of potential host machines (e.g., 1022, 1024 and/or 1026) based on network locality and previous Component Placement Decisions. To assess the network locality, the SLM 1012 can consult a table 1102 of network "distances" between server machines (e.g., 1022, 1024 and 1026), to determine which machines are near the service data sources and destinations, or the path(s) between them. It is noted that the table distances can be determined by measured network delays and bandwidths. Machines on which other Components of the service have previously been placed may be given greater preference by the SLM 1012 for placement of the current Component, particularly if those previously placed Components are to be coupled directly to, or are indicated to potentially share Sub-Component processing with, the current one. All of this information can be combined into calculating "Machine Placement Costs" for each potential host (e.g., 1022, 1024 or 1026).

The SLM 1012 can also review previous Component Placement Decisions to find potential computational savings through joint Component placement. Within one embodiment, each type of Component is associated with a list of named "Sub-Component" techniques it contains. For instance, a Speech Recognition" Component might compute (audio) cepstral features, and use an HMM to analyze them. If there is a machine with the same cepstral sub-component within a previously placed Component, that machine can be given preference in the current Decision process. This information can be combined with the network locality assessment to produce a "Machine Placement Cost" 1106, and the machines with the lowest costs form the pool of potential host machines for the current Component. These costs can next be adjusted according to the resource availability on each machine.

Within Figure 11, the needed computational and memory resources of the Component are determined by the SLM 1012 by supplying service parameters, such as media resolution and frame rate, to a Resource Requirement Routine 1108 associated with that type of Component. Resource availability on potential hosts can be determined by the SLM 1012 through consultation of Local Resource Managers (LRMs) (e.g., 1110, 1112 and 1114) resident on those machines (1022, 1024 and 1026) by sending them resource queries 1116. It is noted that each LRM (e.g., 1110,1112 or 1114) can monitor that machine's state by direct inquiry to its operating system. It is also noted that an LRM can also be referred to as a service-location supervisor (SLS). LRMs can also track (not shown) pending and recently fulfilled requests from the machine's Local Builder (e.g., 1018) as these may not yet be reflected in current processor load statistics. Each LRM (e.g., 1110, 1112 or 1114) can then return the machine resource status back to the SLM 1012, along with network port numbers reserved for use by the Component if it is placed there. The SLM 1012 can increment all Machine Placement Costs 1106 in inverse proportion to the machine's resource availability. As such, the SLM 1012 can compute the final Machine Placement Costs 1106 for each potential host (e.g., 1022, 1024 or 1026).

The machine with the lowest Machine Placement Cost can be selected as the Component host. A Component Placement Decision 1014, specifying this host and containing Component input and output URLs and reserved ports, can be returned by the SLM 1012 to the Service Builder 1008. The table of recent Placement Decisions 1104 of the SLM 1012 can also be updated to reflect this information.

Within Figures 10 and 11, it is noted that the SLM 1012 can decide where to place Components based on service-enabled machine load, network load and/or bandwidth, client location, existing media/data service streaming sessions, aggregation of client requests, and the like. In this manner, the SLM 1012 is able to manage multiple media/data service streaming sessions.

### Exemplary Service Implementation

It is noted that a prototype of the MSA, along with Components from which a variety of services may be built, have been implemented. To better illustrate the operation and benefits of embodiments of the MSA, services supported by three Components operating on video media are discussed:
Resizing: Changes the width and/or height of the video; for instance, a high-resolution video may be down-sampled for better transmission and display on a PDA.
Background Removal: Extracts the dynamic or "interesting" objects in a scene, such as people, while suppressing other, unchanging aspects of the scene, such as walls and furniture. One embodiment of the Background Removal Component may be based on the technique of [18]. It attempts to replace background in a scene with a constant color (such as white), while leaving the foreground unchanged.
Compositing: Uses a mask to replace pixels in a video stream with pixels from another image or video stream, as in the "blue-screening" technique used by local television (TV) weather forecasters. The Compositing Component can replace video stream pixels having a special color (such as white) with pixels from another image or stream, while leaving the other pixels unchanged.

A number of useful services may be constructed from these three Components.

Transcoding of video to lower resolutions suitable for mobile clients, such as PDAs and mobile phones, is desirable for modern CDN design [19,20], and can be achieved via the Resizing Component.

By doing explicit modeling of scene appearance over long periods of time, a Background Removal Component is able to segment the interesting objects of the scene, so that more bits may be used to encode them. For a static camera, the background need only be transmitted once near the start of the video, and again whenever it changes substantially. This can achieve substantial gains over standard compression, which will re-transmit the background as something "new" wherever it is revealed by the moving foreground objects. Thus, this Background Removal Component, optionally in conjunction with Resizing, can be used to provide bit-rate reduction to extremely low target levels requested by users.

The discussion here focuses on a "Mobile Private Video Phone" (MPVP) service that uses all three of the above Components. It is noted that MPVP allows video teleconferencers to prevent others from seeing the details of their surroundings, by using Compositing to replace their background with an image or video of their choice. For instance, a person calling from the beach may prefer to use a background image of his/her office. For users receiving video on mobile devices, down-sampling (via Resizing) can also used, for bit-rate reduction.

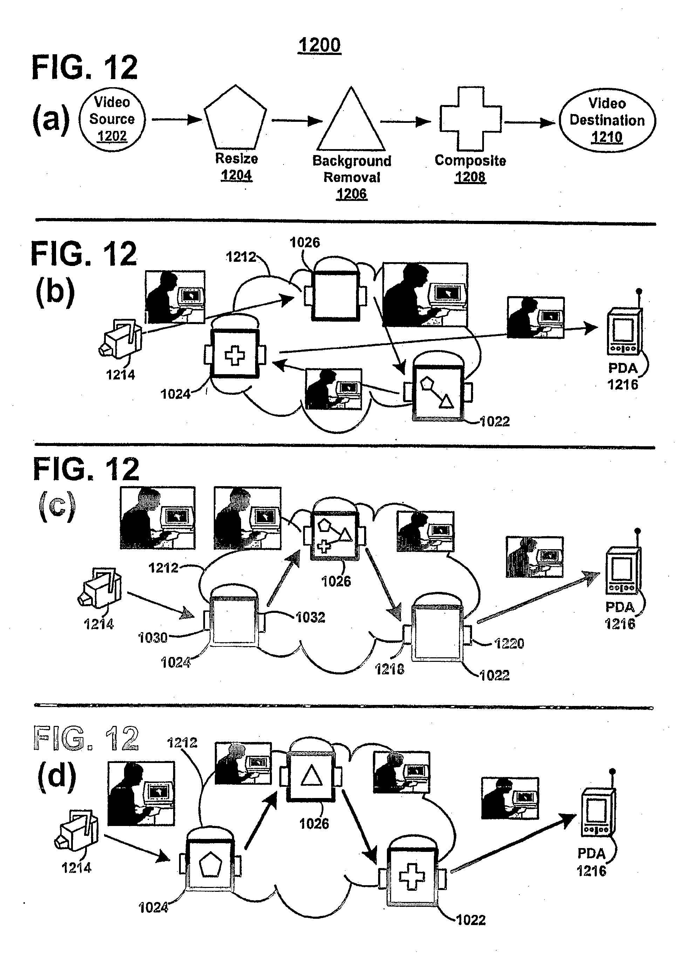

The MPVP service may be started within an Internet Protocol (IP) telephony application that has already opened an audio channel to a remote participant, and now wants to add video. The application can send a request for the "MPVP" service, along with parameters such as the destination IP address and desired video resolution, to an MSA Service Portal (e.g., 1006). The Portal 1006 can then start the MPVP Service Builder (e.g., 1008), which knows the abstract graph for the service, such as, the one shown in Figure 12a. It is noted that Figure 12a is an exemplary abstract graph 1200 of Components of a service in accordance with embodiments of the present invention. Specifically, abstract graph 1200 consists of video from a video source 1202 being sent to a Resizing Component 1204, which sends its output to Background Removal 1206, which in turn feeds into Compositing 1208, before finally delivering video to the video destination 1210.

The Service Builder (e.g., 1008) can send Component Placement Requests (e.g., 1010) for each of the three Components, in the order they appear in the abstract graph 1200, to an SLM (e.g., 1012). For illustration, it is given in Figures12b-d that a network 1212 contains service-enabled machines 1022, 1024 and 1026 on which the SLM 1012 of Figures 10 and 11 can place Components. Also, the SLM 1012 can know how much computation can be reduced if two or more of the Components are placed on the same machine (e.g., 1026). The SLM 1012 can consider the potential computation savings, the current computational load levels on each machine, the processing requirements of each Component, and the network topology and load levels, in order to arrive at a decision as to how to distribute the Components. Three exemplary distributions of Components on the network 1212 are shown in Figures 12b-d.

Within Figures 12b-d, servers 1022, 1024 and 1026 along with video source 1214 and destination 1216 are arranged to reflect their relative network distances. It is noted that images represent the (possibly processed) video flowing on each link. Machines with no processing Components simply forward the media.

The first distribution of Figure 12b is not favored by our SLM because its long data path will result in high latency for the service. Such a distribution might be selected by simpler placement techniques, such as random selection, that do not account for network topology and placement history. Specifically, a video source 1214 sends video to service-enabled machine 1026, that sends its output to service-enabled machine 1022 for Resizing 1204 and Background Removal 1206, that in turn feeds into service-enabled machine 1024 for Compositing 1208, before finally delivering video to its destination, a PDA 1216.

The second configuration of Figure 12c places all Components 1204-1208 on the service-enabled machine 1026. Specifically, video source 1214 sends video to service-enabled machine 1024, that sends its output to service-enabled machine 1026 for Resizing 1204, Background Removal 1206 and Compositing 1208, that in turn feeds into service-enabled machine 1022, before finally delivering video to its destination, PDA 1216. By placing all Components 1204-1208 on the service-enabled machine 1026, this results in computational savings not just through elimination of redundant Sub-Component processing, but also by removing extra video decompression and compression steps, performed by the Ears 1030, 1032, 1218 and 1220, that would be performed if the Components 1204-1208 were on separate machines. The configuration of Figure 12c thus greatly reduces the overall computational load introduced to the service network 1212, and may be preferred when system load levels are high, as when many services are in progress.

However, a disadvantage of placing all Components on one machine is that their combined processing is less likely to keep up with the frame rate of the streaming video originating with video source 1214. For instance, it may be difficult to do Resizing 1204, Background Removal 1206, and Compositing 1208 all on the same machine (e.g., 1026) at 30 frames/sec, so that some frames may need to be dropped and the resultant video quality diminishes.

By spreading the Components 1204-1208 across three different machines (e.g., 1022-1026), on the other hand, as shown in Figure 12d, all three Components 1204-1208 are more likely to run smoothly, without dropped frames, at 30 frames/second, particularly if these machines 1022-1026 were selected because they were relatively unloaded. Specifically, video source 1214 sends video to service-enabled machine 1024 for Resizing 1204, that sends its output to service-enabled machine 1026 for Background Removal 1206, that sends its output to service-enabled machine 1022 for Compositing 1208, before delivering video to its destination, PDA 1216.

The Placement Decisions made by the SLM (e.g., 1012) are returned to the Service Builder (e.g., 1008), which groups them by machine and sends out Construction Requests (e.g., 1016) to the Local Builders (e.g., 1018) resident on those machines. The Local Builders start up the requested Components (e.g., 1204, 1206 and/or 1208), and direct them to send and receive data according to the URLs specified in the Construction Requests. When all Local Builders have notified the Service Builder that their Components are ready, media flow through the service can be started via an RTSP "PLAY" command. It is noted that the images shown on the links between machines in Figures 12b-d show examples of the processing done to a real video stream as it flowed through the various service topologies.

These service examples of Figures 12a-d illustrate some aspects of the MSA. It is understood that this approach can be extended to incorporate additional types of Component processing, as well as branching of processed streams to multiple user devices, each of whom may request different, further processing along his own branch. Also, while this example produces video output from video input, many of other service Components may employ video and audio analysis to produce non-media data streams such as text (e.g. from speech recognition) or event summaries and time indices (e.g. from vision-based person tracking and activity analysis). Additionally, the SLM (e.g., 1012) may decide to distribute the Components in any of a number of ways, depending on the servers' computational loads, the network topology and load level, and the amount of processing reduction that may be obtained through joint placement of Components on the same service-enabled machine.

It is noted that many advanced techniques in video and audio analysis and processing have yet to make their way into widely-used applications. This may be due, in part, to the difficulties of configuring complex media processing applications, in obtaining the substantial processing resources they often require, and in connecting these applications to interesting sources of media and desirable output locations. By enabling flexible media processing that lives in the network itself, an embodiment of the Media Services Architecture has the potential to bring advanced, media-rich applications into mainstream, widespread usage. Embodiments of this architecture integrate easily with media CDNs, allow for modularity of services for easy reconfiguration and re-use, and promote efficient allocation of scarce network resources, while reducing maintenance, compatibility, and availability issues for end-users.

It is noted that inter-machine and/or inter-node communication within the MSA can be implemented in a wide variety of ways in accordance with embodiments of the present invention. This communication can include, but is not limited to, a Service Builder communicating with the SLM, a Service Builder communicating with one or more Local Builders, a LRM communicating with the SLM, and the LRM communicating with a Local Builder. It is noted that the communication between a LRM and a Local Builder may not be inter-machine, but instead may be communication within a machine or node using, but not limited to, an operating system, local files, and the like.

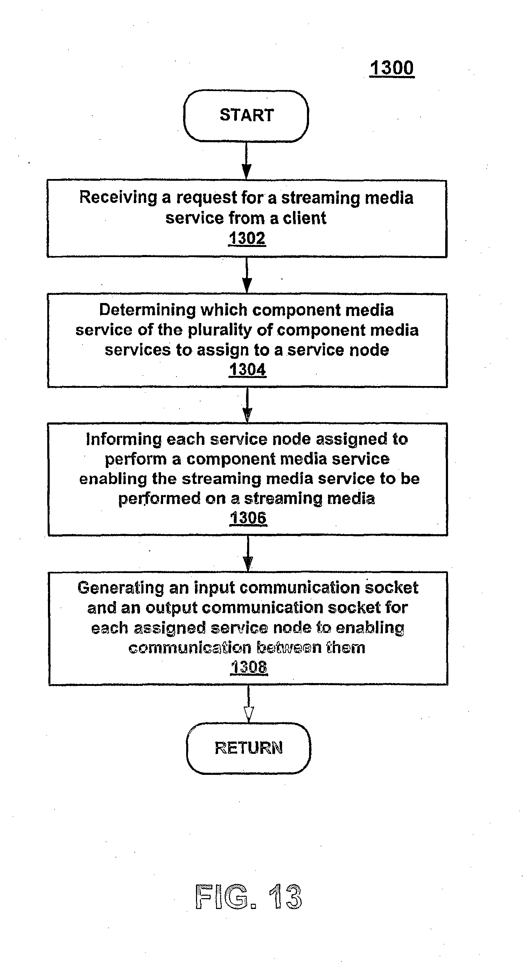

Figure 13 is a flowchart 1300 of operations performed in accordance with an embodiment of the present invention for managing a streaming media service which can also be referred to as a media stream service. Flowchart 1300 includes processes of the present invention that, in some embodiments, are carried out by a processor(s) and electrical components under the control of computer readable and computer executable instructions. The computer readable and computer executable instructions may reside, for example, in data storage features such as computer usable volatile memory, computer usable non-volatile memory and/or computer usable mass data storage. However, the computer readable and computer executable instructions may reside in any type of computer readable medium. Although specific operations are disclosed in flowchart 1300, such operations are exemplary. That is, the present embodiment is well suited to performing various other operations or variations of the operations recited in Figure 13. Within the present embodiment, it noted that the operations of flowchart 1300 can be performed by software, by hardware or by any combination of software and hardware.

At operation 1302, a request is received for a streaming media service from a client. The streaming media service includes a plurality of component media services.

At operation 1304, a determination is made as to which component media service of the plurality of component media services to assign to a service node of a plurality of service nodes of a network

At operation 1306, each service node assigned to perform a component media service of the plurality of component media services is informed enabling the streaming media service to be performed on a streaming media.

At operation 1308, an input communication socket and an output communication socket for each assigned service node is generated to enable communication between the assigned service nodes.

### Multiple Stream Handling Within the MSA

Applications such as video compositing can be network based media services, enabled by the media services architecture (MSA). For video compositing, a plurality of video streams has to be processed together to produce new video streams. This application can be used to provide picture-in-picture effects.

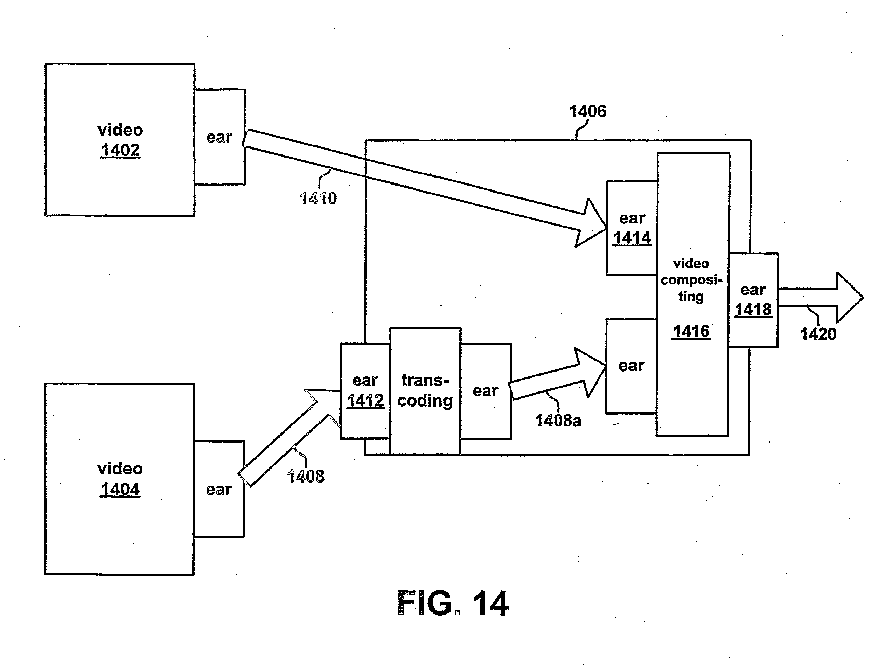

Figure 14 is a block diagram of multiple media streams being handled within the MSA in accordance with an embodiment of the present invention. The MSA can support this kind of service by setting up listening Ears (e.g., 1412 and 1414) that can obtain content from different input streams (e.g., 1408 and 1410). The media streaming sources (e.g., 1402 and 1404) are specified by the Service Location Manager (not shown), which might place the compositing service at a network point (e.g., service node 1406) mid-way between the two video services (for example). The compositing service 1416 then synchronizes the two streams (e.g., 1408a and 1410) with each other, and can perform the "Picture-in-Picture" operation by overlaying the transcoded video 1408a from stream 1408 onto the other stream 1410, and then streams out the resultant video 1420 through an output ear 1418. The embodiment shows how multiple streams can be managed at the input side of a media service, in this case video compositing (e.g., 1416).

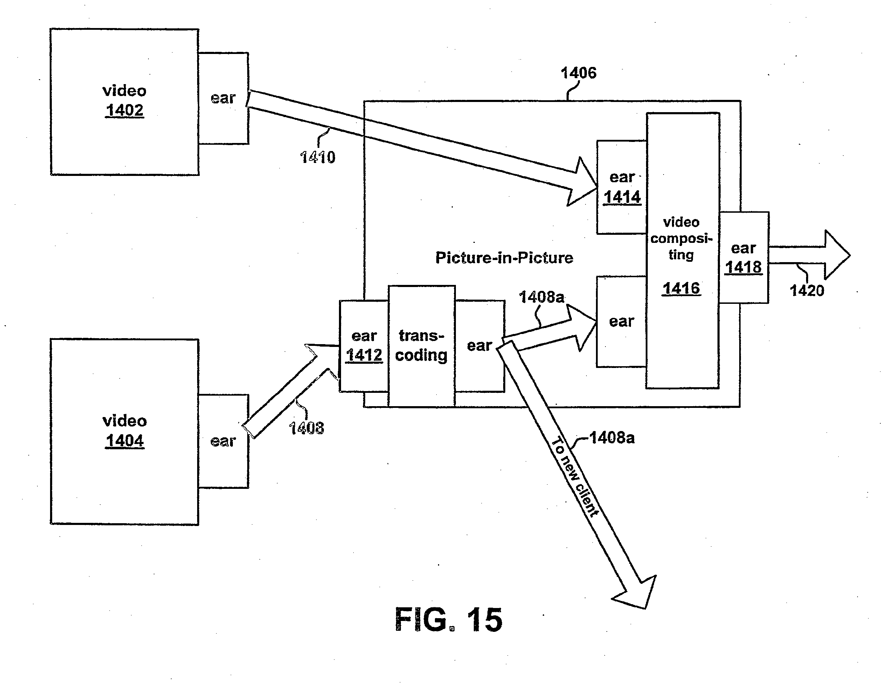

Figure 15 is a block diagram of multiple media streams being handled within the MSA in accordance with another embodiment of the present invention. Specifically, a Local Builder (or the SLM), both not shown, can optimize streaming media as it flows through the network by "tapping" the output of an existing service session as the input to a newly created service session.

It is noted that the components of Figure 15 are operating in a manner similar to the components of Figure 14 described above. However, within Figure 15, if the service is in progress and another client (not shown) requests a transcoded version of video 1408, the SLM can send a message (via SOAP/XML) to the compositing service 1416 to make the transcoded version of the video 1408 available to a new client.

It is noted that multiple media streams can be handle in a wide variety of ways in accordance with embodiments of the present invention. For example, a video stream may be received by a service enabled machine that transcodes it and then outputs the transcoded video to multiple clients. Additionally, a video stream comes into a first node and background removal is performed. The first node sends out the foreground to a second node that is running a compositing service. That 2nd node also has a second video stream coming into it from some other source. The 2nd node outputs to a 5th node a composite video stream of the received foreground video and the second video stream. Additionally, some other part of the first video stream is also being set out to a 3rd node that may be doing some person identification there are a couple components running on that node. The 3rd node generates some index received by a 4th node that is running some text generation that is output to a 5th node running a service which combines the inputs to produce an output of a person on the beach with his name underneath him. Additionally, an audio stream can be coming into the 4th node that is output to the 5th node.

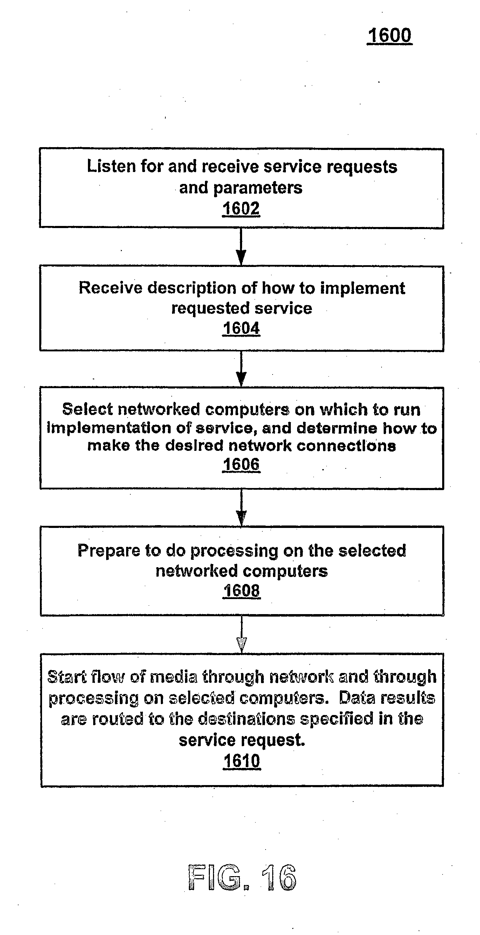

Figure 16 is a flowchart 1600 of operations performed in accordance with an embodiment of the present invention. Flowchart 1600 includes processes of the present invention that, in some embodiments, are carried out by a processor(s) and electrical components under the control of computer readable and computer executable instructions. The computer readable and computer executable instructions may reside, for example, in data storage features such as computer usable volatile memory, computer usable non-volatile memory and/or computer usable mass data storage. However, the computer readable and computer executable instructions may reside in any type of computer readable medium. Although specific operations are disclosed in flowchart 1600, such operations are exemplary. That is, the present embodiment is well suited to performing various other operations or variations of the operations recited in Figure 16. Within the present embodiment, it noted that the operations of flowchart 1600 can be performed by software, by hardware or by any combination of software and hardware.

At operation 1602, listen for and receive service requests and parameters from a client.

At operation 1604, receive description of how to implement requested service.

At operation 1606, select networked computers on which to run implementation of service, and determine how to make the desired network connections.

At operation 1608, prepare to do processing on the selected networked computers.

At operation 1610, start flow of media through network and through processing on selected computers. It is noted that the data results are routed to the destinations specified in the service request.

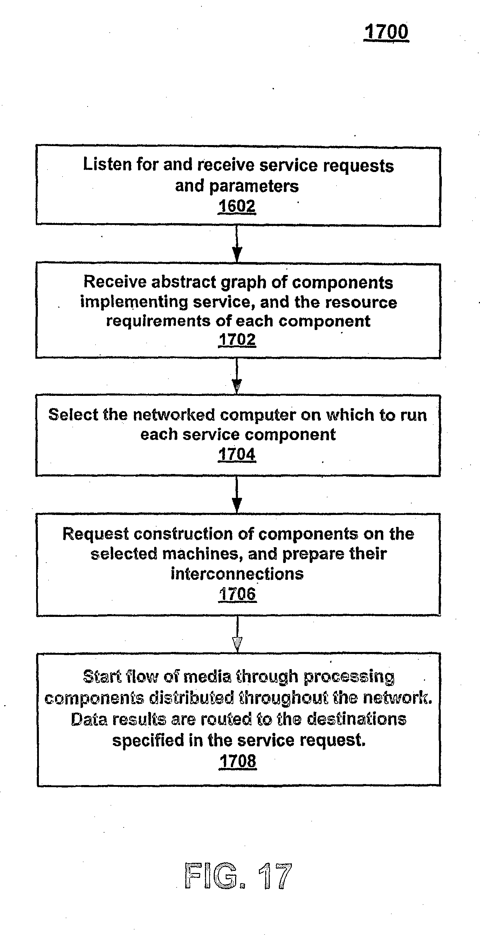

Figure 17 is a flowchart 1700 of operations performed in accordance with an embodiment of the present invention. Flowchart 1700 includes processes of the present invention that, in some embodiments, are carried out by a processor(s) and electrical components under the control of computer readable and computer executable instructions. The computer readable and computer executable instructions may reside, for example, in data storage features such as computer usable volatile memory, computer usable non-volatile memory and/or computer usable mass data storage. However, the computer readable and computer executable instructions may reside in any type of computer readable medium. Although specific operations are disclosed in flowchart 1700, such operations are exemplary. That is, the present embodiment is well suited to performing various other operations or variations of the operations recited in Figure 17. Within the present embodiment, it noted that the operations of flowchart 1700 can be performed by software, by hardware or by any combination of software and hardware.

At operation 1602, listen for and receive service requests and parameters from a client.

At operation 1702, receive abstract graph of components implementing service, and the resource requirements of each component.

At operation 1704, select the networked computer on which to run each service component.

At operation 1706, request construction of components on the selected machines, and prepare their interconnections.

At operation 1708, start flow of media through processing components distributed throughout the network. It is noted that the data results are routed to the destinations specified in the service request.

It is noted that the Ear may be implemented in a wide variety of ways. For example an input Ear may receive using RTP / RTSP, and also include Error-resilient decoder plug-ins, Smart buffering, Flow management, and Minimal data copying. Furthermore, an output Ear may send using RTP / RTSP, and include Variable frame-rate encoder plug-ins, Smart buffering, and Flow management. Additionally, the input Ear or the output Ear can include the function of compression or decompression. Each Ear manages one end (send or receive) of flow for a single media stream. Standards-based media streaming (RTP/RTCP/RTSP) can be used. Additionally, Ears use encoder and decoder plug-ins (e.g. MPEG-1, -2, -4, AMR, WAV) to convert between compressed format suitable for media delivery and uncompressed format often used in media processing. Also, buffering, flow control, and frame-dropping policies can be implemented by Ears to smooth data rate mismatches between delivery and processing.

It is noted that Figures 10, 11, 12a-d along with other embodiments described herein include processes that, in some embodiments, are carried out by a processor(s) and electrical components under the control of computer readable and computer executable instructions. The computer readable and computer executable instructions may reside, for example, in data storage features such as computer usable volatile memory, computer usable non-volatile memory and/or computer usable mass data storage. However, the computer readable and computer executable instructions may reside in any type of computer readable medium. Although specific operations are disclosed herein, such operations are exemplary. That is, these embodiments are well suited to performing various other operations or variations of the operations recited herein. It is noted that the operations recited herein can be performed by software, by hardware or by any combination of software and hardware.

The foregoing descriptions of specific embodiments of the present invention have been presented for purposes of illustration and description. They are not intended to be exhaustive or to limit the invention to the precise forms disclosed, and it is evident many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents.

### REFERENCES

[1] 3GPP TS 26.233/234. Transparent End-to-End Packet Switching Streaming Services (PSS). ftp://ftp/3gpp.org/Specs/2001-03/Rel-4/26_series/.
[2] E. Amir, S. McCanne, and R. Katz. An Active Service Framework and its Application to Real-time Multimedia Transcoding. In Proceedings of SIGCOMM'98, Vancouver, B.C., 1998.
[3] D. Box, D. Ehnebuske, G. Kakivaya, A. Layman, N. Mendelsohn, H. F. Nielsen, S. Thatte, and D. Winer. Simple Object Access Protocol (SOAP) 1.1. http://www.w3.org/TR/SOAP, May 2000. W3C Note.
[4] M. Handley and V. Jacobson. SDP: Session Description Protocol. RFC 2327, April 1998.
[5] ISMA. Internet Streaming Media Alliance Implementation Specification, August 2001.
[6] R. Karrer and T. Gross. Dynamic Handoff of Multimedia Streams. In Proceedings of the Workshop on Network and System Support for Digital Audio and Video, pages 125-133, Port Jefferson, NY, June 2001.
[7] W.-Y. Ma, B. Shen, and J. Brassil. Content Services Network: The Architecture and Protocols. In Proceedings of the 6th International Web Content Caching and Distribution Workshop, Boston, Mass., 2001.
[8] MPEG-4 Industry Forum. http://www.m4 if.org.
[9] W. T. Ooi, R. van Renesse, and B. Smith. Design and Implementation of Programmable Media Gateways. In Proceedings of the Workshop on Network and System Support for Digital Audio and Video, Chapel Hill, NC, June 2000.
[10] S. Roy and B. Shen. Implementation of an Algorithm for Fast Down-Scale Transcoding of Compressed Video on the Itanium. In Proceedings of the 3rd Workshop on Media and Streaming Processors, pages 119-126, Austin, Tex., December 2001.
[11] S. Roy, B. Shen, V. Sundaram, and R. Kumar. Application Level Hand-off Support for Mobile Media Transcoding Sessions. In Proceedings of the Workshop on Network and System Support for Digital Audio and Video, Miami, Fla., USA., May 12-14, 2002.
[12] H. Schulzrinne, S. Casner, R. Frederick, and V. Jacobsen. RTP: A Transport Protocol for Real-Time Applications. http://www.ietf.org/rfc/rfc 1889.txt, January 1996.
[13] H. Schulzrinne, A. Rao, and R. Lanphier. RFC 2326: Real time streaming protocol (RTSP), April 1998.
[14] H. Sun, W. Kwok, and J. Zdepski. Architectures for MPEG compressed bitstream scaling. IEEE Transactions on Circuits Systems and Video Technology, April 1996.
[15] S. J. Wee, J. G. Apostolopoulos, and N. Feamster. Field-to-frame transcoding with temporal and spatial downsampling. In Proceedings of the IEEE International Conference on Image Processing, Kobe, Japan, October 1999.
[16] T. Yoshimura, Y. Yonemoto, T. Ohya, M. Etoh, and S. Wee. Mobile Streaming Media CDN enabled by Dynamic SMIL. In International World Wide Web Conference, May 2002.
[17] S. Roy, M. Covell, J. Ankcorn, S. Wee, M. Etoh, and T. Yoshimura, "A system architecture for mobile streaming media services," in Intl. Wksp. on Mobile Distrib. Computing, May 2003.
[18] M. Harville, G. Gordon, and J. Woodfill, "Adaptive background subtraction using color and depth," in ICIP, October 2002.
[19] H. Sun, W. Kwok, and J. Zdepski, "Architectures for MPEG compressed bitstream scaling," IEEE Trans. Circuits and Sys. for Video Tech., vol. 6, April 1996.
[20] S. Wee, B. Shen, and J. Apostolopoulos, "Compressed-domain video processing," HP Labs Tech Report, October 2002.

## Claims

1. A method for managing a streaming media service, said method comprising:
receiving (1302) a request (1004) for a streaming media service from a client (102), said streaming media service comprising a plurality of media services components (1020; 1204, 1206, 1208);
determining (1304) which media service component of said plurality of media services components (1020; 1204, 1206, 1208) to assign to a service node of a plurality of service nodes (1022, 1024, 1026) of a network (1028; 1212); and
informing (1306) each service node (1022, 1024, 1026) assigned to perform a media service component of said plurality of media services components (1020; 1204, 1206, 1208) enabling said streaming media service to be performed on a streaming media (1032),
wherein said determining is based on a previously assigned media service component (1020; 1204, 1206, 1208).

2. The method as described in Claim 1, wherein said streaming media (1032) is selected from video, audio, multimedia, and text.

3. The method as described in Claim 1, wherein said determining is further based on the location of said client (102).

4. The method as described in Claim 1, wherein said determining is further based on a bandwidth of said network (1028; 1212).

5. The method as described in Claim1, wherein said determining is further based on a load on said network (1028; 1212).

6. The method as described in Claim 1, wherein said determining is further based on a load on each service node of said plurality of service nodes.

7. The method as described in Claim 1, wherein said determining is further based on an existing streaming media service on said network (1028; 1212).

8. The method as described in Claim 1, wherein receiving (1302) said request is through a service portal (306).

9. The method as described in Claim 1, further comprising:
generating (1308) an input communication socket (1030) and an output communication socket (1032) for each assigned service node to enabling communication between said assigned service nodes (1022, 1024, 1026).

## Patentansprüche

1. Verfahren zur Verwaltung eines Streaming-Media-Dienstes, wobei das Verfahren Folgendes umfasst:
Empfangen (1302) einer Anforderung (1004) eines Streaming-Media-Dienstes durch einen Client (102), wobei der Streaming-Media-Dienst eine Mehrzahl von Media-Dienst-Komponenten (1020; 1204, 1206, 1208) umfasst;
Bestimmen (1304), welche Media-Dienst-Komponente der Mehrzahl von Media-Dienst-Komponenten (1020; 1204, 1206, 1208) einem Serviceknoten einer Mehrzahl von Serviceknoten (1022, 1024, 1026) eines Netzwerks (1028; 1212) zugewiesen werden soll, und
Informieren (1306) jedes Serviceknotens (1022, 1024, 1026), dem die Ausführung einer Media-Dienst-Komponente der Mehrzahl von Media-Dienst-Komponenten (1020; 1204, 1206, 1208) zugewiesen ist, wodurch der Streaming-Media-Dienst auf einem Streaming-Medium (1032) ausgeführt werden kann,
wobei das Bestimmen auf einer vorher zugewiesenen Media-Dienst-Komponente (1020; 1204, 1206, 1208) beruht.

2. Verfahren nach Anspruch 1, wobei das Streaming-Medium (1032) aus Video, Audio, Multimedia und Text ausgewählt ist.

3. Verfahren nach Anspruch 1, wobei das Bestimmen ferner auf dem Standort des Clients (102) beruht.

4. Verfahren nach Anspruch 1, wobei das Bestimmen ferner auf einer Bandbreite des Netzwerks (1028; 1212) beruht.

5. Verfahren nach Anspruch 1, wobei das Bestimmen ferner auf einer Last des Netzwerks (1028; 1212) beruht.

6. Verfahren nach Anspruch 1, wobei das Bestimmen ferner auf einer Last jedes Serviceknotens der Mehrzahl von Serviceknoten beruht.

7. Verfahren nach Anspruch 1, wobei das Bestimmen ferner auf einem bestehenden Streaming-Media-Dienst im Netzwerk (1028; 1212) beruht.

8. Verfahren nach Anspruch 1, wobei das Empfangen (1302) der Anforderung über ein Service-Portal (306) erfolgt.

9. Verfahren nach Anspruch 1, ferner umfassend:
Erzeugen (1308) eines Eingangskommunikations-Sockets (1030) und eines Ausgangskommunikations-Sockets (1032) für jeden zugewiesenen Serviceknoten, um die Kommunikation zwischen den zugewiesenen Serviceknoten (1022, 1024, 1026) zu ermöglichen.

## Revendications

1. Procédé de gestion d'un service de diffusion multimédia en continu, ledit procédé comprenant les étapes suivantes :
recevoir (1302) une demande (1004) pour un service de diffusion multimédia en continu provenant d'un client (102), ledit service de diffusion multimédia en continu comprenant une pluralité de composantes de services multimédia (1020 ; 1204, 1206, 1208) ;
déterminer (1304) quelle composante de services multimédia, parmi ladite pluralité de composantes de services multimédia (1020 ; 1204, 1206, 1208), à attribuer à un noeud de services parmi une pluralité de noeuds de services (1022, 1024, 1026) d'un réseau (1028 ; 1212) ; et
informer (1306) chaque noeud de services (1022, 1024, 1026) attribué d'exécuter une composante de services multimédia parmi ladite pluralité de composantes de services multimédia (1020; 1204, 1206, 1208) permettant audit service de diffusion multimédia en continu d'être exécuté sur un contenu multimédia en continu (1032),
dans lequel ladite détermination est basée sur une composante de services multimédia (1020 ; 1204, 1206, 1208) précédemment attribuée.

2. Procédé selon la revendication 1, dans lequel ledit contenu multimédia en continu (1032) est sélectionné parmi des contenus vidéo, audio, multimédia et texte.

3. Procédé selon la revendication 1, dans lequel ladite détermination est en outre basée sur la localisation dudit client (102).

4. Procédé selon la revendication 1, dans lequel ladite détermination est en outre basée sur une bande passante dudit réseau (1028 ; 1212).

5. Procédé selon la revendication 1, dans lequel ladite détermination est en outre basée sur une charge sur ledit réseau (1028 ; 1212).

6. Procédé selon la revendication 1, dans lequel ladite détermination est en outre basée sur une charge sur chaque noeud de services parmi ladite pluralité de noeuds de services.

7. Procédé selon la revendication 1, dans lequel ladite détermination est en outre basée sur un service de diffusion multimédia en continu existant sur ledit réseau (1028 ; 1212).

8. Procédé selon la revendication 1, dans lequel la réception (1302) de ladite demande s'effectue à travers un portail de services (306).

9. Procédé selon la revendication 1, comprenant en outre l'étape suivante :
générer (1308) un port de communication d'entrée (1030) et un port de communication de sortie (1032) pour chaque noeud de services attribué afin de permettre la communication entre lesdits noeuds de services attribués (1022, 1024, 1026).
